# EUROPEAN PATENT APPLICATION

(11) **EP 4 027 683 A1**
(43) Date of publication of application: **13.07.2022**
(21) Application number: 20860297.9
(22) Date of filing: 27.08.2020
(51) Int. Cl.: H04W 24/02, H04W 68/12, H04W 88/10

(54) **COMMUNICATION SYSTEM, COMMUNICATION TERMINAL, AND NETWORK**

(30) Priority: 04.09.2019 JP 2019160982
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); NAKAZAWA, Masayuki, Tokyo 100-8310 (JP); IWAYAMA, Naofumi, Tokyo 100-8310 (JP)
(74) Representative: Sajda, Wolf E.
(86) International application number: PCT/JP2020/032289
(87) International publication number: WO 2021/044932

(57) **Abstract**

A technology that enables prompt NW connection is provided. A communication system includes: a communication terminal; and a plurality of networks configured to perform radio communication with the communication terminal. The communication terminal determines whether or not there is paging causing collision among a plurality of pagings respectively transmitted to the communication terminal from the plurality of networks (ST1615). When the communication terminal detects the collision of the paging, the communication terminal notifies at least one of the plurality of networks that transmits the paging causing the collision of the paging about the collision of the paging (ST1629).

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

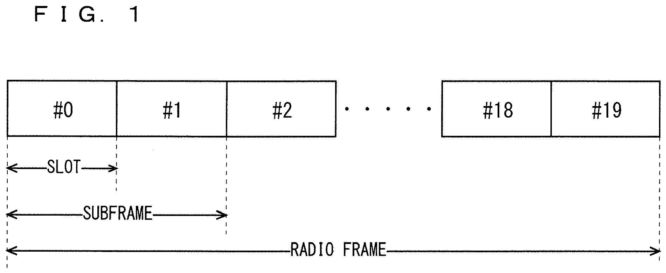

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS 38.211 V15.2.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Further, in 3GPP, some new technologies have been under study.For example, operation of a terminal using a plurality of subscriber identity modules (SIMs) or the like has been under study (see Non-Patent Documents 20 and 21).

### Prior Art Documents

### Non-Patent Documents

| | |
|---|---|
| Non-Patent Document 1: | 3GPP TS 36.300 V15.4.0 |
| Non-Patent Document 2: | 3GPP S1-083461 |
| Non-Patent Document 3: | 3GPP TR 36.814 V9.2.0 |
| Non-Patent Document 4: | 3GPP TR 36.912 V15.0.0 |
| Non-Patent Document 5: | "Scenarios, requirements and KPIs for 5G mobile and wireless system", ICT-317669-METIS/D1.1 |
| Non-Patent Document 6: | 3GPP TR 23.799 V14.0.0 |
| Non-Patent Document 7: | 3GPP TR 38.801 V14.0.0 |
| Non-Patent Document 8: | 3GPP TR 38.802 V14.2.0 |
| Non-Patent Document 9: | 3GPP TR 38.804 V14.0.0 |
| Non-Patent Document 10: | 3GPP TR 38.912 V14.1.0 |
| Non-Patent Document 11: | 3GPP RP-172115 |
| Non-Patent Document 12: | 3GPP TS 37.340 V15.2.0 |
| Non-Patent Document 13: | 3GPP TS 38.211 V15.2.0 |
| Non-Patent Document 14: | 3GPP TS 38.213 V15.2.0 |
| Non-Patent Document 15: | 3GPP TS 38.214 V15.2.0 |
| Non-Patent Document 16: | 3GPP TS 38.300 V15.2.0 |
| Non-Patent Document 17: | 3GPP TS 38.321 V15.2.0 |

### Summary

### Problem to be Solved by the Invention

In 3 GPP, operation of the UE using multiple SIMs has been under study, and for example, countermeasures for a case in which timings of paging from two NWs to the UE overlap has been under study (see Non-Patent Documents 20 and 21).However, Non-Patent Documents 20 and 21 do not disclose a specific method for avoiding overlap of timings of paging, in other words, collision of paging.This makes avoidance of paging collision between two NWs impossible.As a result, there is a problem in that connection between the UE and one NW cannot be promptly started in the communication system.

The present invention has been made in view of the problem described above, and the object underlying the invention is to provide a technology that enables prompt NW connection.

### Means to Solve the Problem

According to the present invention, provided is a communication system including: a communication terminal; and a plurality of networks configured to perform radio communication with the communication terminal, wherein the communication terminal determines whether or not there is paging causing collision among a plurality of pagings respectively transmitted to the communication terminal from the plurality of networks, and when the communication terminal detects the collision of the paging, the communication terminal notifies at least one of the plurality of networks that transmits the paging causing the collision of the paging.

According to the present invention, provided is a communication terminal configured to perform radio communication with a plurality of networks, wherein the communication terminal determines whether or not there is paging causing collision among a plurality of pagings respectively transmitted to the communication terminal from the plurality of networks, and when the communication terminal detects the collision of the paging, the communication terminal notifies at least one of the plurality of networks that transmits the paging causing the collision of the paging.

According to the present invention, provided is a network configured to perform radio communication with a communication terminal, wherein the communication terminal determines that paging transmitted from the network to the communication terminal collides with paging transmitted from another network to the communication terminal, and when the communication terminal notifies the network of collision of the paging, the network changes timing of transmitting the paging to the communication terminal.

### Effects of the Invention

According to the present invention, prompt NW connection is enabled.

These and other objects, features, aspects and advantages of the present invention will become more apparent from the following detailed description when taken in conjunction with the accompanying drawings.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME
- FIG. 11: is a block diagram illustrating a configuration of the 5GC.
- FIG. 12: is a flowchart illustrating an outline from cell search to idle state operation performed by a communication terminal (UE) in an LTE communication system.
- FIG. 13: illustrates an example structure of a cell in an NR system.
- FIG. 14: is an architecture diagram illustrating an example of connection between a multi-SIM UE and a plurality of NWs according to the first embodiment.
- FIG. 15: is a diagram illustrating an example of collision of paging from a plurality of NWs according to the first embodiment.
- FIG. 16: is a sequence diagram illustrating the first example of operation in which the multi-SIM UE detects paging collision and notifies the base station according to the first embodiment.
- FIG. 17: is a sequence diagram illustrating the first example of operation in which the multi-SIM UE detects paging collision and notifies the base station according to the first embodiment.
- FIG. 18: is a sequence diagram illustrating the second example of operation in which the multi-SIM UE detects paging collision and notifies the base station according to the first embodiment.
- FIG. 19: is a sequence diagram illustrating the second example of operation in which the multi-SIM UE detects paging collision and notifies the base station according to the first embodiment.
- FIG. 20: is a sequence diagram illustrating the third example of operation in which the multi-SIM UE detects paging collision and notifies the base station according to the first embodiment.
- FIG. 21: is a sequence diagram illustrating the third example of operation in which the multi-SIM UE detects paging collision and notifies the base station according to the first embodiment.
- FIG. 22: is a sequence diagram illustrating an example of operation in which the multi-SIM UE detects paging collision and notifies the AMF according to the first embodiment.
- FIG. 23: is a sequence diagram illustrating an example of operation in which the multi-SIM UE detects paging collision and notifies the AMF according to the first embodiment.
- FIG. 24: is a diagram illustrating the first example of time division multiplexing of paging according to the first embodiment.
- FIG. 25: is a diagram illustrating the second example of time division multiplexing of paging according to the first embodiment.
- FIG. 26: is an architecture diagram illustrating an example of connection between the multi-SIM UE and a plurality of NWs according to the first modification of the first embodiment.
- FIG. 27: is a sequence diagram illustrating the first example of operation in which the multi-SIM UE performs random access processing with an inactive base station according to the first modification of the second embodiment.
- FIG. 28: is a sequence diagram illustrating the first example of operation in which the multi-SIM UE performs random access processing with the inactive base station according to the first modification of the second embodiment.
- FIG. 29: is a sequence diagram illustrating the second example of operation in which the multi-SIM UE performs random access processing with the inactive base station according to the first modification of the second embodiment.
- FIG. 30: is a sequence diagram illustrating the second example of operation in which the multi-SIM UE performs random access processing with the inactive base station according to the first modification of the second embodiment.
- FIG. 31: is a sequence diagram illustrating the third example of operation in which the multi-SIM UE performs random access processing with the inactive base station according to the first modification of the second embodiment.
- FIG. 32: is a sequence diagram illustrating the third example of operation in which the multi-SIM UE performs random access processing with the inactive base station according to the first modification of the second embodiment.
- FIG. 33: is a sequence diagram illustrating the fourth example of operation in which the multi-SIM UE performs random access processing with the inactive base station according to the first modification of the second embodiment.
- FIG. 34: is a sequence diagram illustrating the fourth example of operation in which the multi-SIM UE performs random access processing with the inactive base station according to the first modification of the second embodiment.

### Description of Embodiments

### The First Embodiment

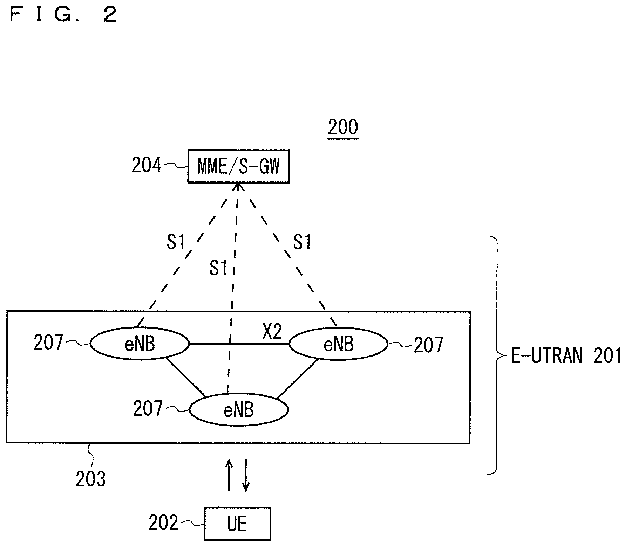

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC_CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

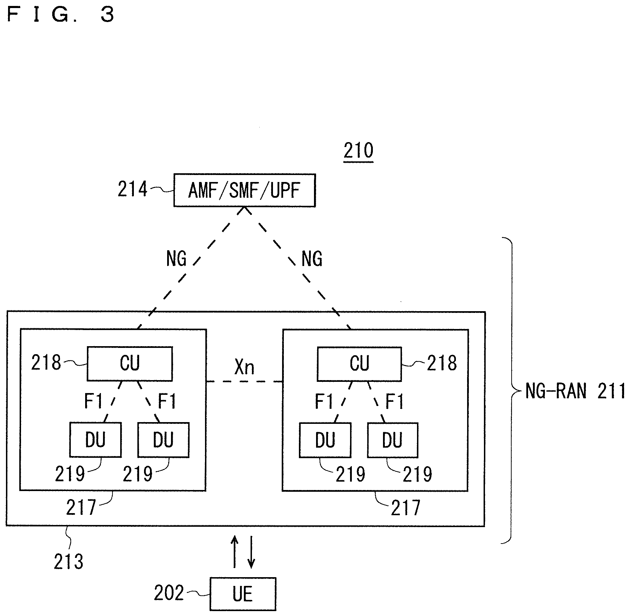

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NG-RAN NodeB (gNB)") 213, and transmits and receives signals to and from the NR base station device 213 via radio communication. Furthermore, the core network is referred to as a 5G Core (5GC).

When control protocols for the UE 212, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC IDLE, RRC CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214.

The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

In the 5G communication system, a unified data management (UDM) function and a policy control function (PCF) described in Non-Patent Document 22 (3GPP TS 23.501 V16.1.0) may be included.The UDM and/or the PCF may be included in the 5GC unit of FIG. 3.

In the 5G communication system, a non-3GPP interworking function (N3IWF) described in Non-Patent Document 22 (3GPP TS 23.501 V16.1.0) may be included.The N3IWF may terminate an access network (AN) between the N3IWF and the UE in non-3GPP access between the N3IWF and the UE.

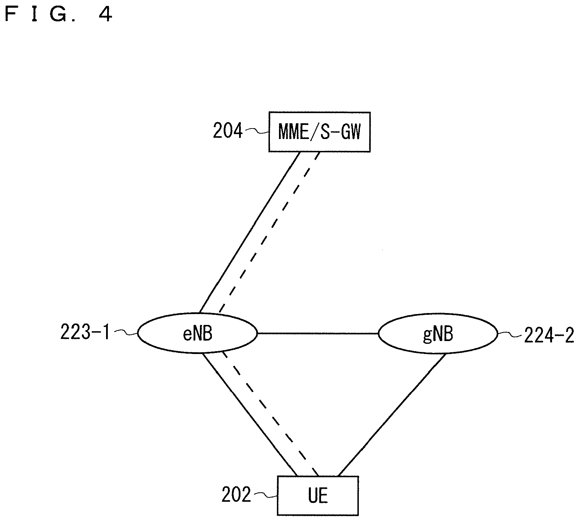

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

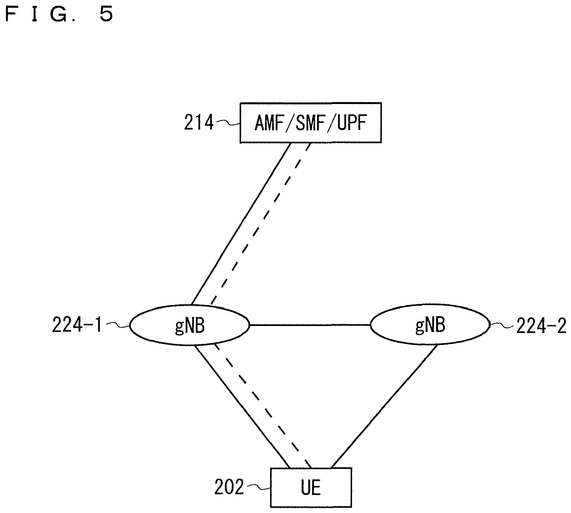

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

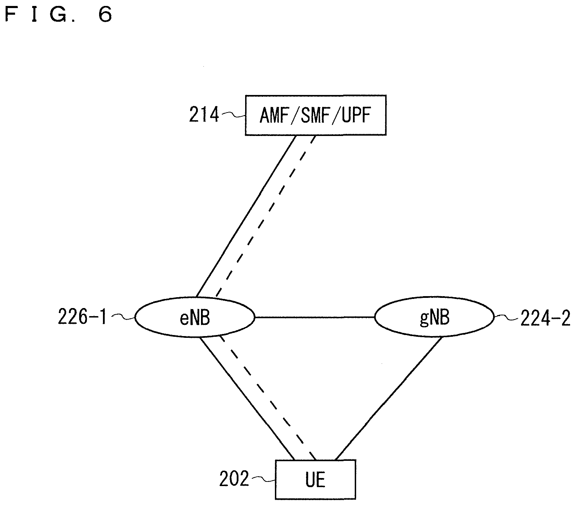

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

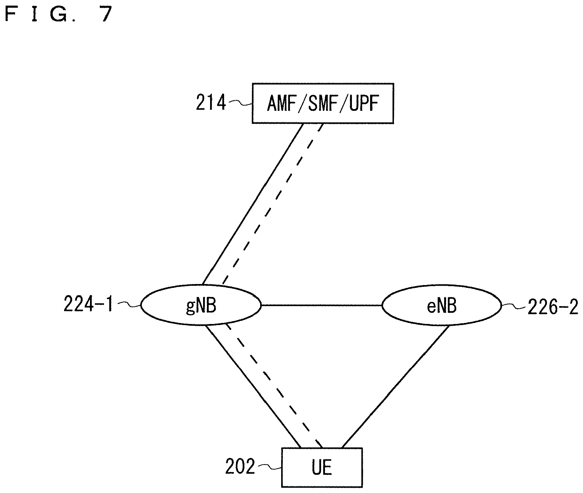

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

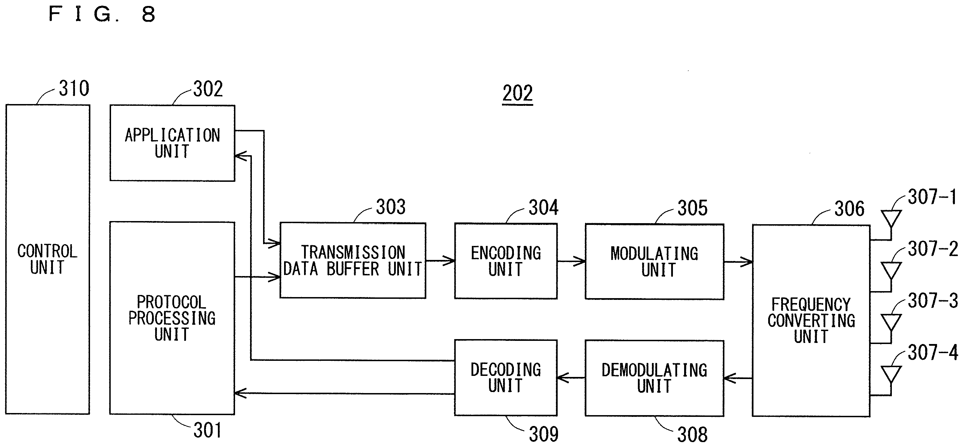

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

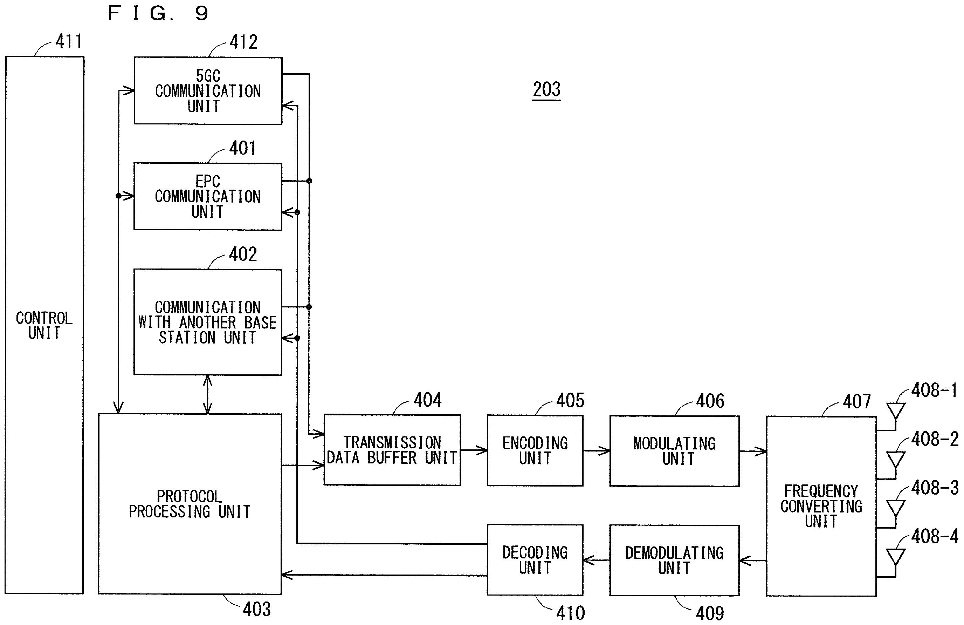

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station.

The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO.

The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401 and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

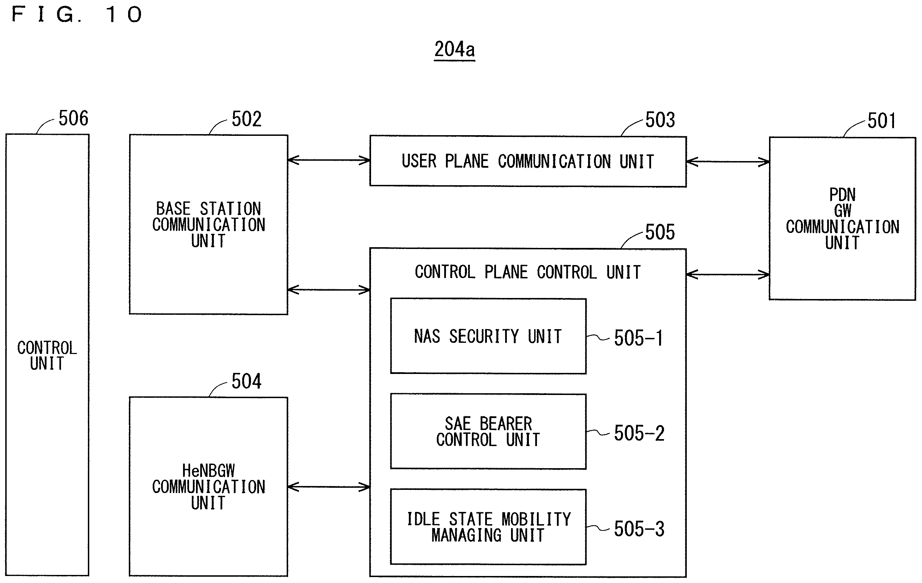

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility management unit 505-3, and performs an overall process for the control plane (hereinafter also referred to as a "C-plane"). The NAS security unit 505-1 provides, for example, security of a non-access stratum (NAS) message.

The SAE bearer control unit 505-2 manages, for example, a system architecture evolution (SAE) bearer. The idle state mobility management unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility management unit 505-3 may manage the CSG of the eNBs 207 to be connected to the MME 204a, CSG IDs, and a whitelist.

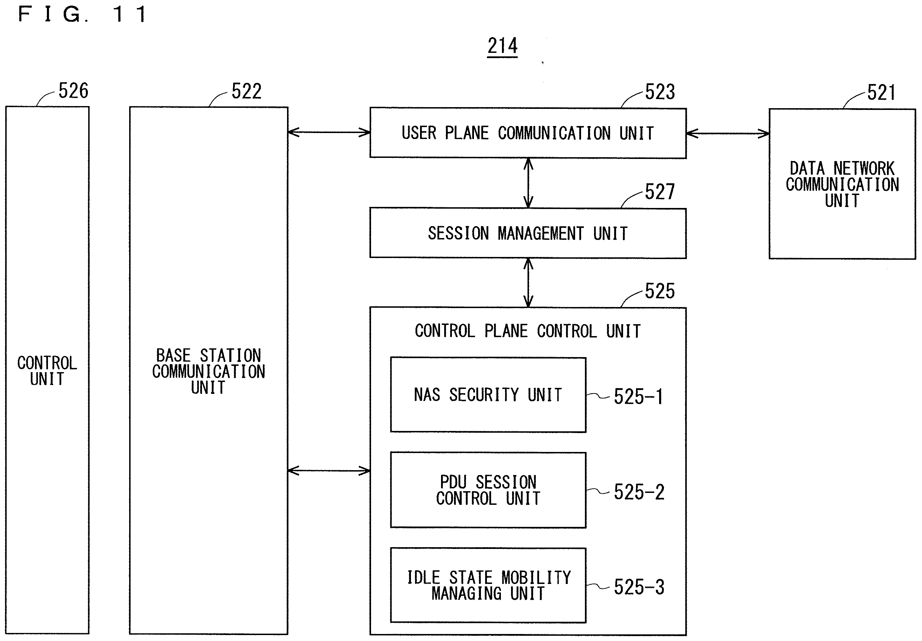

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data through the user plane communication unit 523 to a session management unit 527. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility management unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility management unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

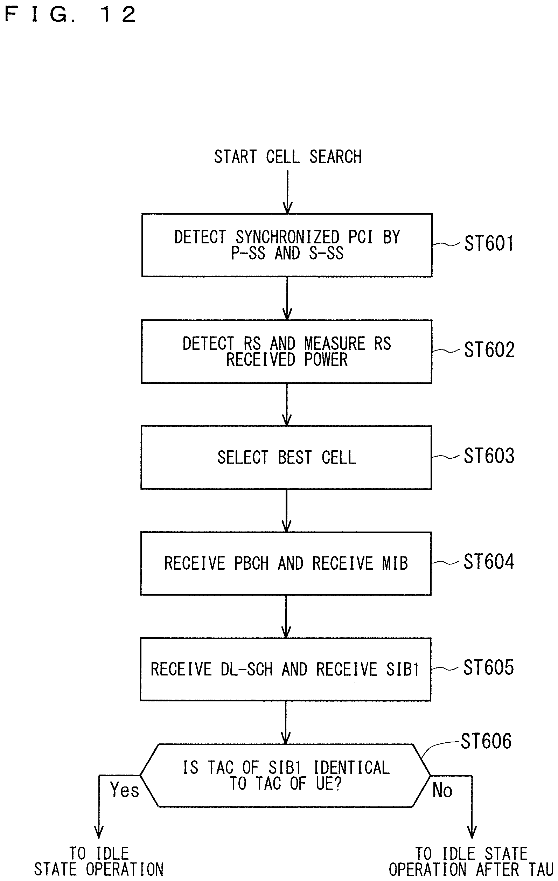

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

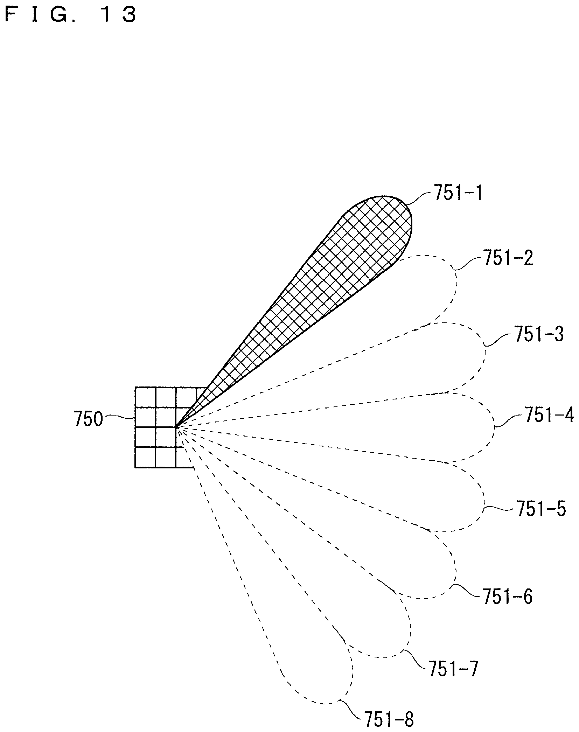

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

The UE may be connected to a plurality of NWs, or may be in a connectable state (hereinafter, "connect" may include not only an actually connected state but also a connectable state). The UE may connect to the plurality of NWs by using a plurality of SIMs. The UE may include only one pair of transceivers, or may include a plurality of pairs of transceivers. The plurality of NWs may be PLMNs, or may be non-public networks (NPNs). Connection to the plurality of NWs may be performed in parallel.

Regarding connection between the UE and each NW, an RRC state of the UE may be an RRC_CONNECTED state, may be an RRC_INACTIVE state, or may be an RRC_IDLE state. A CM state of the UE may be CM-IDLE, or may be CM-CONNECTED. The UE may be in the RRC_CONNECTED state or the CM-CONNECTED state with respect to two or more out of the plurality of NWs of connection destinations. As another example, the UE may be in the RRC_CONNECTED state or the CM-CONNECTED state with respect to only one NW out of the plurality of NWs of connection destinations.

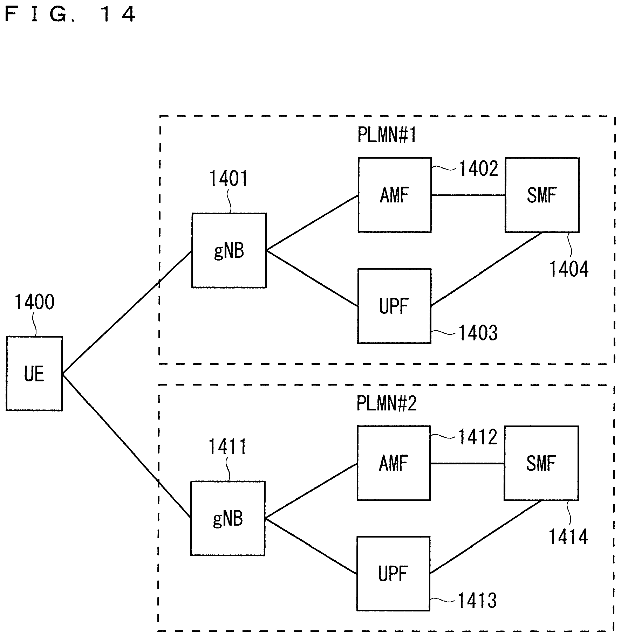

FIG. 14 is an architecture diagram illustrating an example of connection between a UE using a plurality of SIMs (which may be hereinafter referred to as a multi-SIM UE) and a plurality of NWs.In FIG. 14, the multi-SIM UE is connected to PLMN #1 and PLMN #2 in parallel.

In the example illustrated in FIG. 14, a UE 1400 connects to a gNB 1401 in PLMN #1. Further, the UE 1400 connects to a gNB 1411 in PLMN #2. The gNB 1401 connects to an AMF 1402 and a UPF 1403 in PLMN #1. An SMF 1404 in PLMN #1 connects to the AMF 1402 and the UPF 1403. The gNB 1411 connects to an AMF 1412 and a UPF 1413 in PLMN #2. An SMF 1414 in PLMN #2 connects to the AMF 1412 and the UPF 1413.

The example illustrated in FIG. 14 illustrates a case in which the UE 1400 connects to two PLMNs; however, the UE 1400 may connect to three or more PLMNs. Further, among the two NWs to which the UE 1400 connects, one or two or more may be NPN(s). The same may also apply to a case in which the UE 1400 connects to three or more NWs.

In the UE connecting to a plurality of NWs in parallel, timings of paging may overlap (which may be hereinafter referred to as collision of paging). The UE in which collision of paging occurs may be the UE that includes only one pair of transceivers. In this case, a specific method for avoiding collision of paging has not yet been disclosed. Thus, each apparatus of the communication system cannot avoid paying for the UE. As a result, there is a problem that the UE cannot receive paging from one or a plurality of NWs described above.

In the first embodiment, a method for solving the above-described problem is disclosed.

The UE detects collision of paging from a plurality of NWs. The UE may perform the detection by using frame timing and timing related to paging (which may be hereinafter referred to as paging timing) in each NW. When timings related to paging in a plurality of NWs overlap in real time, the UE may determine that the paging has collided. The UE may correct the paging timing in each NW by using the frame timing in each NW. The UE may perform the detection by using the corrected paging timing. With the UE performing the detection by using the frame timing, for example, collision of paging can be detected even when frame timings of each NW are different.

The UE may acquire the frame timing in the base station of each NW by using cell search.The UE may acquire timing related to paging in each NW by using system information broadcast from the base station of each NW and an identifier of the UE allocated from each NW to the UE.The timing related to paging may be a paging frame (PF), a paging occasion (PO), or a PDCCH monitoring occasion used for paging reception, or may be a combination of two or more of the above.

For detection of collision of paging, the UE may use the PF, may use the PO, may use the PDCCH monitoring occasion, or may use two or more of the above.For example, with the UE using the PF for the detection, a processing amount related to the detection can be reduced. As another example, with the UE using a combination of the PF, the PO, and the PDCCH monitoring occasion for the detection, accuracy of the detection can be enhanced.

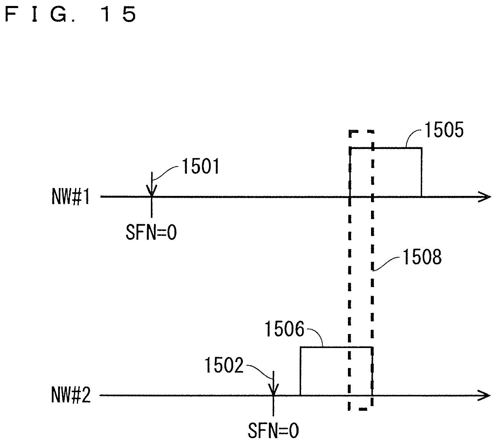

FIG. 15 illustrates an example of collision of paging from a plurality of NWs.FIG. 15 illustrates a case in which the UE connects to NW #1 and NW #2.In FIG. 15, the horizontal axis represents time.

At time indicated by an arrow 1501 illustrated in FIG. 15, the SFN of NW #1 becomes 0.At time indicated by an arrow 1502, the SFN of NW #2 becomes 0.The paging timing of the UE in NW #1 is arranged in a section 1505, and the paging timing of the UE in NW #2 is arranged in a section 1506.

In the example illustrated in FIG. 15, the section 1505 and the section 1506 overlap with respect to time in a section 1508 indicated by a broken line.In this case, the UE determines that collision of paging has occurred.

In the example illustrated in FIG. 15, the paging timing may be a paging frame (PF), a paging occasion (PO), or a PDCCH monitoring occasion used for paging reception, or may be a combination of two or more of the above.

As another example of paging collision detection in the UE, when a time period of N periods of SS burst periods in the base station of one NW and paging timing in the base station of another NW overlap, it may be determined that collision of paging has occurred.The "N" may be 0, may be 1, or may be 2 or greater.The "N" may be determined in a standard, or may be determined by the UE.The "N" may be determined by the base station, for example, the base station that transmits paging received by the UE, and be notified to the UE.With this configuration, for example, the UE can establish downlink synchronization with the base station that transmits paging.As a result, the UE can promptly acquire paging.

The UE notifies the NW of collision of paging.The UE may include information necessary for avoidance of paging collision in the notification.The UE may request the NW to perform paging collision avoidance.The above-described information may be included in the request.

The UE may perform the notification to the base station.For example, the UE may perform the notification to the base station with earlier PRACH transmission timing among the base stations of a plurality of NWs.With this configuration, for example, the UE can promptly connect to one of the plurality of NWs. As a result, paging collision can be promptly avoided.

The UE may perform the notification to the base station of one NW.With this configuration, for example, in the communication system, paging collision avoidance can be executed with a small signaling amount.As another example, the UE may perform the notification to the base stations of a plurality of NWs.With this configuration, for example, in the communication system, flexibility of paging timing change can be enhanced.

The UE may perform the notification by using RRC signaling.For example, the UE may use RRC setup request (RRCSetupRequest) for the notification. With this configuration, for example, the UE can promptly execute the notification to the base station.As another example, the UE may use RRC setup complete (RRCSetupComplete) for the notification.With this configuration, for example, the UE can notify the base station with much information being included.

As another example, the UE may use RRC resume request (RRCResumeRequest) for the notification.With this configuration, for example, the UE can promptly execute the notification to the base station.As another example, the UE may use RRC resume complete (RRCResumeComplete) for the notification.With this configuration, for example, the UE can notify the base station with much information being included.

As another example, the UE may use RRC reconfiguration complete (RRCReconfigurationComplete) for the notification.With this configuration, the UE can notify the base station with much information being included.

As another example, new RRC signaling may be provided.For example, signaling referred to as RRC reconfiguration request (RRCReconfigurationRequest) may be provided for use, or signaling referred to as paging collision notification (PagingCollisionNotification) may be provided for use.

As another example regarding the notification from the UE to the base station, MAC signaling may be used.With this configuration, for example, the UE can promptly perform notification of paging collision.As another example, L1/L2 signaling may be used.With this configuration, for example, the UE can further promptly perform notification of paging collision.

The UE may include information as to whether or not there is paging collision in the notification.The information may be, for example, an identifier as to whether or not there is paging collision.With this configuration, for example, the UE can perform notification of paging collision with a small signaling amount.

The UE may include information used for paging collision avoidance in the notification.As examples of the information used for paging collision avoidance, the following (1) to (10) are disclosed.
(1) Information related to an identifier of another NW
(2) Information related to paging timing of another NW
(3) Information related to a numerology in another NW
(4) Information related to frame timing in another NW
(5) Information used for paging timing derivation in another NW
(6) Information related to a beam used for communication with a notification destination NW
(7) Information related to a synchronization signal of another NW
(8) Information related to a radio access technology (RAT) of another NW
(9) Information related to multi-SIM operation of the UE
(10) Combination of (1) to (9) described above

For example, the information of (1) above may be a PLMN-ID of the another NW, may include an NPN-ID disclosed in Non-Patent Document 23 (TR 23.734), or may include a CAG-ID.With this configuration, for example, the base station can recognize the NW in which paging collision is to be avoided. As a result, complexity of the avoidance processing can be avoided.

As another example regarding the information of (1) above, an identifier for uniquely identifying the UE may be used.The identifier may be, for example, a 5G globally unique temporary identifier (5G-GUTI).The base station may extract the PLMN-ID of the another NW from the 5G-GUTI.With this configuration, for example, the base station can simultaneously acquire an identifier of another NW and an identifier of the UE.As a result, the base station can acquire information used for paging timing derivation in another NW with a small amount of signaling.

For example, the information of (2) above may be a paging frame (PF), a paging occasion (PO), or a PDCCH monitoring occasion used for paging reception in another NW, or may be a combination of two or more of the above.With this configuration, for example, the processing amount in paging collision avoidance by the base station can be reduced.

As another example, the information of (2) above may include information related to time of paging timing in another NW.For example, the information related to the time may include time at the start point of the paging timing, may include time related to the end point of the paging timing, or may include information related to duration of the paging timing, or a plurality of pieces of information among above may be included.The paging timing may be a paging frame (PF), a paging occasion (PO), or a PDCCH monitoring occasion used for paging reception in another NW, or may be a combination of two or more of the above.With this configuration, for example, the processing amount in paging collision avoidance by the base station can be reduced.

For example, the information of (3) above may be a subcarrier spacing, a slot length, or a symbol length used by the UE in paging reception from another NW, or may be a parameter µ disclosed in Section 4.2 of Non-Patent Document 13 (TS 38.21 1).With this configuration, for example, reliability in paging collision avoidance by the base station can be enhanced.

For example, the information of (4) above may be information that gives frame timing between a notification destination base station and a base station of another NW in a unit of an SFN, a unit of a subframe, a unit of a slot, a unit of a symbol, or a minimum unit (for example, a unit of Ts) in the communication system, or may be a combination of those.The above-described slot may be a slot in the notification destination base station, or may be a slot in another NW.With this configuration, for example, the processing amount in paging collision avoidance by the base station can be reduced.

As another example, the information of (4) above may be a predetermined time point in another NW, for example, time at the boundary of a predetermined SFN.The boundary may be the start of the SFN, or may be the end of the SFN.As another example, it may be time at a predetermined subframe boundary, may be time at a predetermined slot boundary, or may be time at a predetermined symbol boundary.The UE may acquire the information through cell search for the another NW, or may acquire the information from broadcast information from the another NW.With this configuration, for example, the processing amount required for the notification of the UE can be reduced.

For example, the information of (5) above may include an identifier of the UE in another NW, or may include a parameter used for determination of paging timing in the another NW.The parameter may include a part or all of broadcast information from the base station of the NW, for example, PCCH configuration information (PCCH-Config) disclosed in Non-Patent Document 24 (TS 38.33 1).With this configuration, for example, the processing amount required in the notification from the UE can be reduced.

For example, the above-described identifier related to the information of (5) above may be UE_ID disclosed in Section 7.1 of Non-Patent Document 25 (TS 38.304), a 5G S-temporary mobile subscription identifier (5G-S-TMSI), a 5G temporary mobile subscription identifier (5G-TMSI), or a 5G-GUTI disclosed in Non-Patent Document 22 (TS 23.501).

The above-described parameter related to the information of (5) above may include a discontinuous reception (DRX) period (T) of the UE, may include a total number (N) of paging frames in the period, may include the number (Ns) of paging occasions in the PF, may include an offset (PF_offset) used in PF determination, or may include the first PDCCH monitoring occasion (first-PDCCH-MonitoringOccasionOfPO) in the PO, which are disclosed in Non-Patent Document 25 (TS 38.304).

The information of (6) above may be information related to a beam used by the UE for reception from the notification destination base station.The beam may be information related to the beam used by the UE for reception of the SS block from the base station, or may be information related to the beam used by the UE for reception of broadcast information from the base station, for example, the SIB1, or remaining minimum system information (RMSI).The base station may change the paging timing in the beam in which the UE exists by using the information of (6) above.The base station may change the broadcast information in the beam.With this configuration, for example, the base station can flexibly change the paging timing.

For example, the information of (7) above may be information related to the period of the SS burst, or may be SS block transmission duration in one period of the SS burst.By using the information of (7) above, for example, the base station may configure the paging timing avoiding a plurality of SS burst periods transmitted from the base station of another NW, or may configure the paging timing avoiding the SS block transmission duration.The UE may receive the synchronization signal of the base station of another NW by using the information.The UE may receive paging after receiving the synchronization signal.With this configuration, for example, the difference in timings in paging reception of the UE can be prevented.

For example, the information of (8) above may be information indicating that the base station of another NW is the NR base station, or may be information indicating that the base station of another NW is the LTE base station.The base station may use the information for change of the paging timing.For example, when the base station of another NW is the LTE base station, and for example, the paging timing in the LTE base station is fixed, the base station may change the period of the paging timing.With this configuration, for example, probability of avoidance failure of paging collision in the communication system can be reduced.

For example, the information of (9) above may be information indicating whether or not the UE is a multi-SIM UE, or may be information related to operation using multiple SIMs.For example, the information related to operation using multiple SIMs may include the number of transmitters and/or receivers in the UE, may include the number of NWs to which the UE can connect, or may include the number of RRCs that the UE can hold.The information related to operation using multiple SIMs may be information related to a combination of RRC states in the UE, for example, information indicating whether or not RRC_CONNECTED can be simultaneously enabled for a plurality of base stations of a plurality of NWs.The UE may include the information in UE capability, for example, so as to notify the base station of the information. The base station may use the information for data transmission and reception with the UE.With this configuration, for example, efficiency in the communication system can be enhanced.

The base station may change the paging timing by using the notification from the UE.For example, the base station may change the parameter used for determination of the paging timing.The parameter may be, for example, the above-described parameter related to the information of (5) above.The base station may broadcast the changed parameter to the UEs under the base station.For example, the base station may include the changed parameter in the SIB 1 to broadcast the changed parameter. The UE may change timing of receiving the paging (which may be hereinafter referred to as paging reception timing) by using the broadcast.

The UE may preferentially receive paging from the base station of the notification destination of the information over paging from the base station of another NW.For example, until the UE receives a paging parameter changed in the base station from the base station, the UE may receive the prioritized paging.With this configuration, for example, the UE can promptly acquire a changed paging parameter.

The base station may change the parameter for each beam.The broadcast information from the base station may be different for each beam.With this configuration, for example, flexibility of the parameter configuration in the communication system can be enhanced.

As another example, the base station may change the parameter individually for each UE.The base station may notify the UE of the changed parameter individually for each UE.The base station may include the changed parameter in RRC signaling, for example, RRC reconfiguration (RRCReconfiguration) to perform notification of the changed parameter individually for each UE.The UE may change paging reception timing by using the individual notification.With this configuration, for example, in the communication system, complexity of processing related to the change of the paging timing can be avoided.

As another example, the base station may collectively configure or collectively change the parameter for a plurality of UEs.For example, the base station may collectively perform configuration and/or change of the parameter for a plurality of multi-SIM UEs.For example, the above-described plurality of multi-SIM UEs may be all of the multi-SIM UEs under the base station.For example, the above-described plurality of multi-SIM UEs may have the same or different NW connection destinations other than the base station. The plurality of multi-SIM UEs may be handled as a UE group.The base station performs configuration and/or change of the parameter for the UE group.

The base station may collectively notify the plurality of UEs of the parameter that is collectively configured and/or changed for the plurality of UEs.For the notification, for example, RRC signaling may be used.The collective notification may be provided with a specific UE-ID, for example, a multicast UE-ID.The plurality of UEs may configure and/or change the parameter by using the collective notification.With this configuration, for example, the signaling amount between the base station and the plurality of UEs can be reduced.

The above-described collective notification from the base station to the plurality of UEs may be performed in other RRC signaling.With this configuration, for example, the signaling amount between the base station and the plurality of UEs can further be reduced.

The UE may notify the base station of another NW of the changed parameter that is notified from the base station. The UE may include information related to the identifier of the UE in the notification to the base station of the another NW.The identifier may be an identifier allocated in the NW of the base station that changed the parameter. The base station of the another NW may or may not change paging timing in the another NW by using the parameter.With this configuration, for example, the paging timing in the another NW can be changed, avoiding the notified parameter.As a result, paging collision after paging timing change can be prevented.

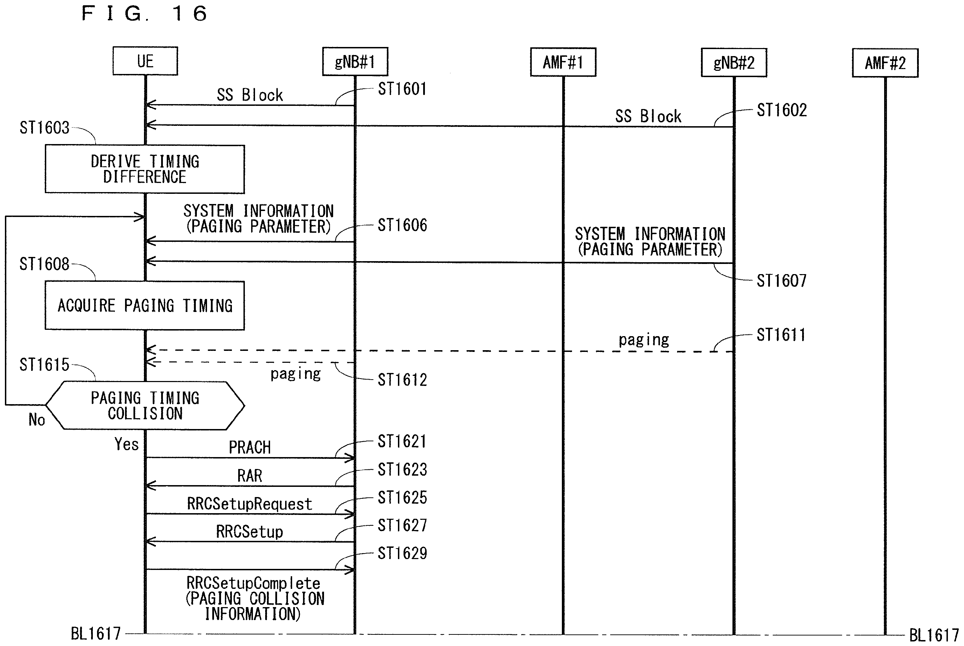

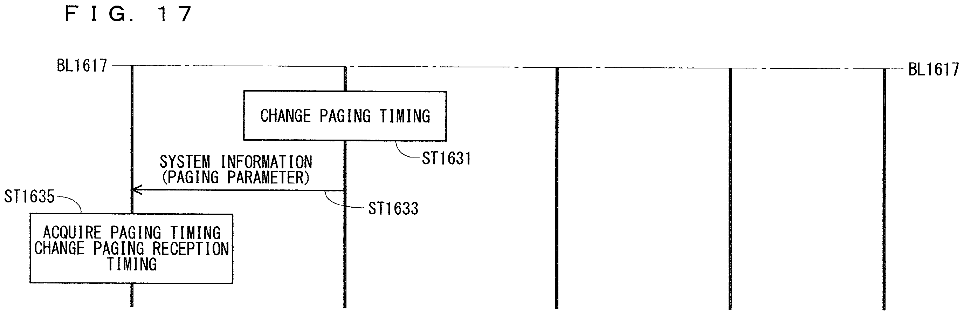

FIG. 16 and FIG. 17 are each a sequence diagram illustrating the first example of operation in which the multi-SIM UE detects paging collision and notifies the base station.FIG. 16 and FIG. 17 are connected at the position of a boundary line BL1617.In FIG. 16 and FIG. 17, the UE is connected to two NWs (NW #1 and NW #2), and are connected to gNB #1 under NW #1 and gNB #2 under NW #2.In FIG. 16 and FIG. 17, AMF #1 and AMF #2 respectively exist under NW #1 and NW #2.In the example illustrated in FIG. 16 and FIG. 17, the UE is in the RRC_IDLE state for both of gNB #1 and gNB #2.FIG. 16 and FIG. 17 illustrate an example in which the UE notifies gNB #1 of paging collision.

In Step ST1601 illustrated in FIG. 16, gNB #1 transmits an SS block to the UE.In Step ST1602, gNB #2 transmits an SS block to the UE.In Step ST1603, the UE acquires SFN timings of gNB #1 and gNB #2 transmitted in Steps ST1601 and ST1602 described above, and derives a difference of the SFN timings of both of the gNBs.

In Step ST1606 illustrated in FIG. 16, gNB #1 broadcasts system information to the UE.The system information broadcast in Step ST1606 includes a parameter related to paging in gNB #1.In Step ST1607, gNB #2 broadcasts system information to the UE.The system information broadcast in Step ST1607 includes a parameter related to paging in gNB #2.The parameters broadcast in Steps ST1606 and ST1607 may be parameters of the same type as the parameter included in the information of (5) above disclosed as the information used for paging collision avoidance.In Step ST1608, the UE acquires paging timings in gNB #1 and gNB #2 by using the information acquired in Steps ST1606 and ST1607 described above.

Step ST1611 illustrated in FIG. 16 represents the paging timing from gNB #1 to the UE.Step ST1612 represents the paging timing from gNB #2 to the UE.FIG. 16 illustrates a case in which the paging timings of gNB #1 and gNB #2 collide with each other.

In Step ST1615 illustrated in FIG. 16, the UE determines whether or not there is collision of paging from gNB #1 and gNB #2.For the determination, the difference of the frame timings acquired in Step ST1603 and the paging timings acquired in Step ST1608 may be used.When the UE determines that paging collision does not occur, the processing may return to the processing of system information acquisition of Steps ST1606 and ST1607, without performing processing of Step ST1621 and subsequent steps.When the UE determines that paging collision occurs, processing of Step ST1621 and subsequent steps are performed.

Steps ST1621 to ST1629 illustrated in FIG. 16 relate to processing in which the UE notifies gNB #1 of paging collision.In Step ST1621, the UE transmits the PRACH to gNB #1.In Step ST1623, gNB #1 transmits a random access response (RAR) to the UE.

In Step ST1625 illustrated in FIG. 16, the UE requests gNB #1 to perform setup of the RRC.For the request, RRC signaling, for example, RRC setup request (RRCSetupRequest) of Non-Patent Document 24 (TS 38.331) may be used.In Step ST1627, gNB #1 commands the UE to perform RRC setup.For the command, RRC signaling, for example, RRC setup (RRCSetup) of Non-Patent Document 24 (TS 38.331) may be used.

In Step ST1629 illustrated in FIG. 16, the UE notifies gNB #1 of completion of the RRC setup.For the notification, RRC signaling, for example, RRC setup complete (RRCSetupComplete) of Non-Patent Document 24 (TS 38.331) may be used.The UE may include information related to paging collision in the notification of Step ST1629.For example, the information may include information as to whether or not there is paging collision, or may include the information of (1) to (10) above disclosed as an example of information used for paging collision avoidance.

In Step ST1631 illustrated in FIG. 17, gNB #1 changes the paging timing.In Step ST1633, gNB #1 broadcasts system information to the UE.The broadcast may include a parameter related to the changed paging timing.In Step ST1635, the UE acquires the paging parameter broadcast in Step ST1633 described above, and acquires the paging timing of gNB #1 by using the parameter. The UE changes paging reception timing of gNB #1 in accordance with the acquired paging timing.

The UE receives paging of gNB #1 at the changed paging reception timing of gNB #1.With this configuration, the UE can receive paging from gNB #1 and paging from gNB #2.

For example, the UE receives paging from gNB #1, and when there is no paging, the UE switches reception for gNB #2 before the paging timing of gNB #2, and receives paging of gNB #2.Further, the UE receives paging from gNB #2, and when there is no paging, the UE switches reception for gNB #1 before the paging timing of gNB #1, and receives paging of gNB #1.For example, the UE may receive paging from gNB #1, and when there is paging, the UE may perform processing according to the received paging.

The base station may request the AMF to change the identifier of the UE.The base station may, for example, perform the request when paging collision avoidance is impossible due to change of only the parameter (for example, the PCCH configuration information (PCCH-Config)) used for determination of the paging timing in (5) above.When paging collision is possible due to change of the parameter, the base station may not perform the request to the AMF.With this configuration, for example, unnecessary change of the identifier when paging collision can be avoided only with change of the PCCH configuration information can be prevented.The request may include one or a plurality of UE identifiers as change candidates.For the request, for example, signaling in the N2 interface may be used.

New signaling, for example, signaling of N2 UE configuration update request (N2 UE configuration update request), may be provided for use.For example, the identifier of the UE may be UE_ID disclosed in Section 7.1 of Non-Patent Document 25 (TS 38.304), or may be a 5G S-temporary mobile subscription identifier (5S-TMSI), a 5G temporary mobile subscription identifier (5G-TMSI), or a 5G-GUTI, which are disclosed in Non-Patent Document 22 (TS 23.501).The AMF may change the identifier of the UE by using the signaling.

The base station may notify the AMF of information used for paging collision avoidance.The base station may include the information in the request of the identifier of the UE for notification.The information may include the information of (1) to (10) above.The base station may convert the information of (1) to (10) above notified from the UE into signaling in the N2 interface for notification. The information may further include information related to its own NW.The information related to its own NW may be such information that another NW is interpreted as its own NW regarding the information of (1) to (10) above.The AMF may change the identifier of the UE by using the information related to its own NW.With this configuration, for example, paging collision in the changed identifier of the UE can be prevented.

The AMF may notify the UE of the changed identifier.For the notification, NAS signaling, for example, configuration update command (CONFIGURATION UPDATE COMMAND) disclosed in Non-Patent Document 27 (TS 24.501), may be used.The identifier may be, for example, a 5G S-temporary mobile subscription identifier (5G-S-TMSI) disclosed in Non-Patent Document 22 (TS 23.501).The UE may update the UE-ID of the UE by using the notification.

The UE may notify the AMF of completion of identifier update of the UE.For the notification, NAS signaling, for example, configuration update complete (CONFIGURATION UPDATE COMPLETE) disclosed in Non-Patent Document 27 (TS 24.501), may be used.

The AMF may notify the base station of the changed identifier.For the notification, signaling in the N2 interface may be used.The base station may change the paging timing of the UE by using the notification.For example, the base station may change a parameter used for determination of the paging timing by using the changed identifier of the UE.With this configuration, for example, flexibility of paging timing change in the UE can be enhanced. The notification of the changed parameter from the base station to the UE may be the same as that described above.

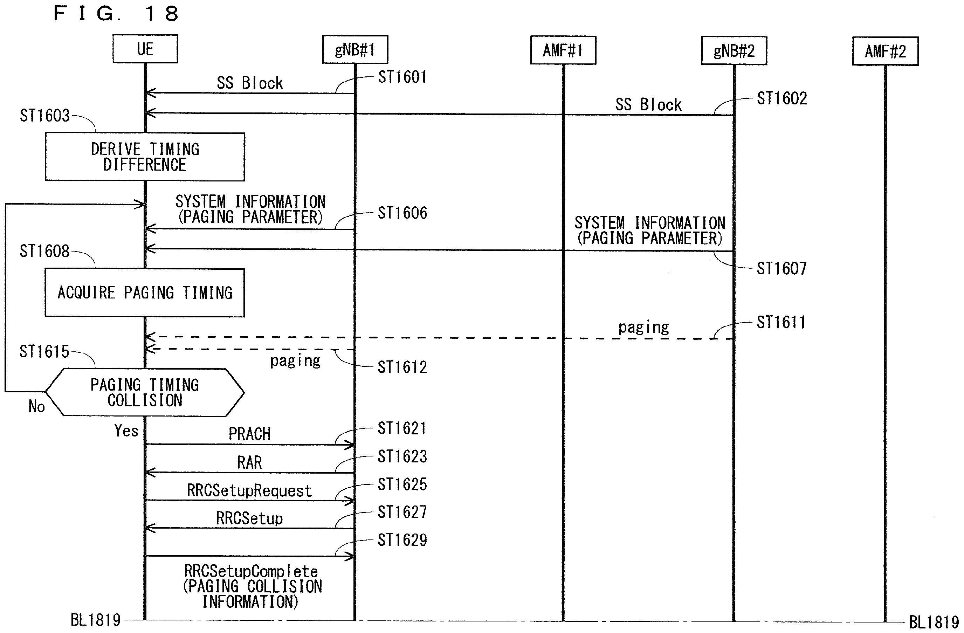

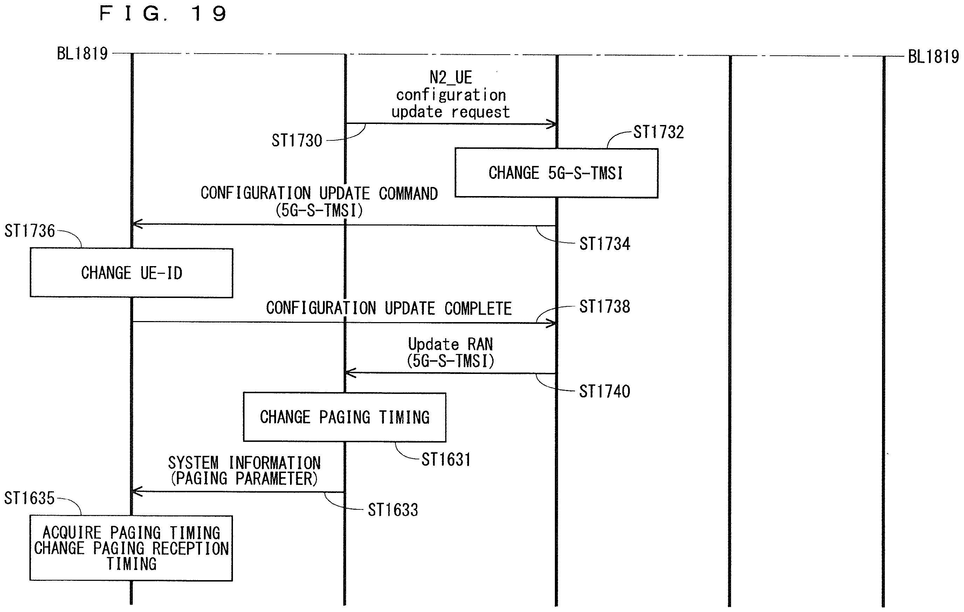

FIG. 18 and FIG. 19 are each a sequence diagram illustrating the second example of operation in which the multi-SIM UE detects paging collision and notifies the base station, and the base station requests the identifier of the UE from the AMF.FIG. 18 and FIG. 19 are connected at the position of a boundary line BL1819.In FIG. 18 and FIG. 19, the UE is connected to two NWs (NW #1 and NW #2), and are connected to gNB #1 under NW #1 and gNB #2 under NW #2.In FIG. 18 and FIG. 19, AMF #1 and AMF #2 respectively exist under NW #1 and NW #2.In the example illustrated in FIG. 18 and FIG. 19, the UE is in the RRC_IDLE state for both of gNB #1 and gNB #2.FIG. 18 and FIG. 19 illustrate an example in which the UE notifies gNB #1 of paging collision, and gNB #1 requests AMF #1 to change the identifier of the UE.In FIG. 18 and FIG. 19, processes the same as those of FIG. 16 and FIG. 17 are denoted by the same step numbers, and common description is omitted.

Steps ST1601 to ST1629 illustrated in FIG. 18 are the same as those of FIG. 16.

In Step ST1730 illustrated in FIG. 19, gNB #1 requests AMF #1 to change the identifier of the UE.For the request, for example, signaling in the N2 interface may be used.New signaling, for example, signaling of N2 UE configuration update request (N2 UE configuration update request), may be provided for use.In Step ST1732, AMF #1 changes the identifier of the UE.The identifier may be, for example, a 5G-S-TMSI.

In Step ST1734 illustrated in FIG. 19, AMF #1 commands the UE to update the identifier of the UE.For the command, NAS signaling, for example, configuration update command (CONFIGURATION UPDATE COMMAND) disclosed in Non-Patent Document 27 (TS 24.501), may be used.The command may include, for example, the updated 5G-S-TMSI of the UE.In Step ST1736, the UE updates the UE-ID of the UE by using the command.

In Step ST1738 illustrated in FIG. 19, the UE notifies the AMF of completion of identifier update of the UE.For the notification, NAS signaling, for example, configuration update complete (CONFIGURATION UPDATE COMPLETE) disclosed in Non-Patent Document 27 (TS 24.501), may be used.

In Step ST1740 illustrated in FIG. 19, the AMF notifies the base station of the changed identifier.For the notification, signaling in the N2 interface may be used.The notification may include the changed identifier.The identifier may be a 5G-S-TMSI, may be a UE-ID, or may be a 5G-GUTI.In Step ST1631, gNB #1 may change a parameter related to paging timing by using the changed identifier notified in Step ST1740 described above.

Steps ST1633 and ST1635 illustrated in FIG. 19 are the same as those of FIG. 17.

The notification of the changed identifier from the AMF to the base station may be performed before the notification of completion of identifier update of the UE from the UE to the AMF.With this configuration, for example, flexibility of paging timing change in the UE can be enhanced, and simultaneously, the base station can promptly determine the parameter related to the paging timing.

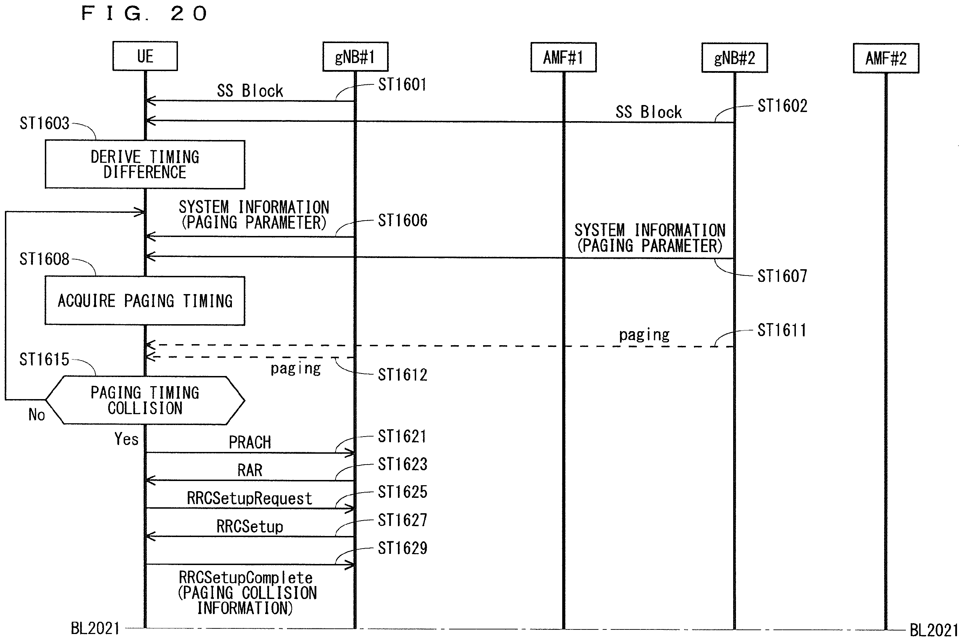

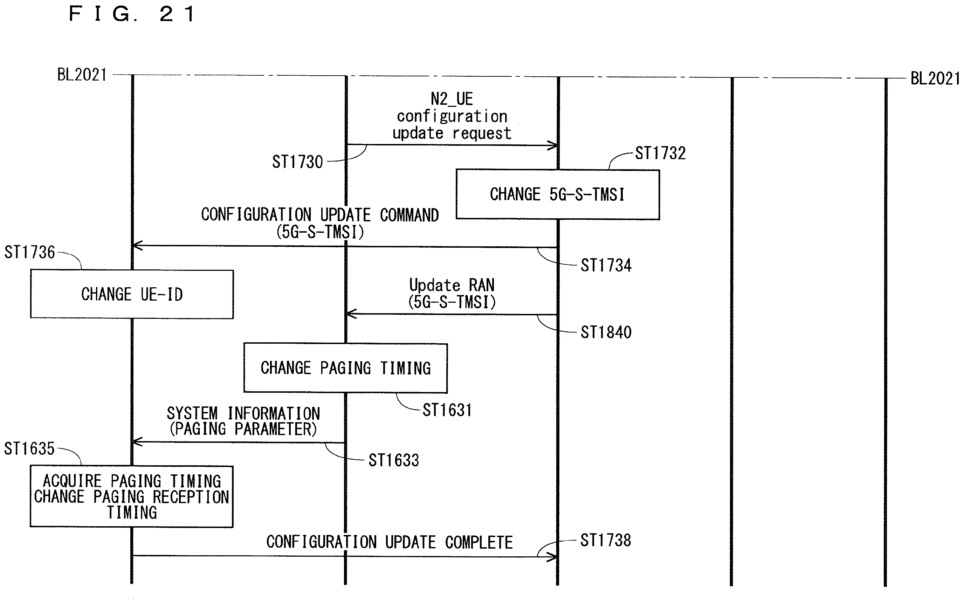

FIG. 20 and FIG. 21 are each a sequence diagram illustrating the third example of operation in which the multi-SIM UE detects paging collision and notifies the base station, and the base station requests the identifier of the UE from the AMF.FIG. 20 and FIG. 21 are connected at the position of a boundary line BL2021.In FIG. 20 and FIG. 21, the UE is connected to two NWs (NW #1 and NW #2), and are connected to gNB #1 under NW #1 and gNB #2 under NW #2.In FIG. 20 and FIG. 21, AMF #1 and AMF #2 respectively exist under NW #1 and NW #2.In the example illustrated in FIG. 20 and FIG. 21, the UE is in the RRC_IDLE state for both of gNB #1 and gNB #2.FIG. 20 and FIG. 21 illustrate an example in which the UE notifies gNB #1 of paging collision, and gNB #1 requests AMF #1 to change the identifier of the UE.In FIG. 20 and FIG. 21, processes the same as those of FIG. 16 to FIG. 19 are denoted by the same step numbers, and common description is omitted.

Steps ST1601 to ST1629 illustrated in FIG. 20 are the same as those of FIG. 16.

Steps ST1730 to ST1736 illustrated in FIG. 21 are the same as those of FIG. 19.

In Step ST1840 illustrated in FIG. 21, the AMF notifies the base station of the changed identifier.The notification may be the same as that of Step ST1740 in FIG. 19.

Steps ST1631 to ST1635 illustrated in FIG. 21 are the same as those of FIG. 17.

Step ST1738 illustrated in FIG. 21 is the same as that of FIG. 19.

FIG. 20 and FIG. 21 illustrate a case in which the notification of completion of identifier update of the UE from the UE to the AMF is performed after paging timing change in the UE.As another example, the UE may perform notification of completion of identifier update of the UE before paging timing change.For example, the UE may perform Step ST1738 after UE-ID change illustrated in Step ST1736.With this configuration, for example, standby time in the AMF of the notification can be reduced. As a result, efficiency of operation in the AMF can be enhanced.

As another example regarding the notification from the UE to the NW, the UE may perform the notification to the AMF.For example, the UE may perform the notification to the AMF connected to the base station with earlier PRACH transmission timing among the base stations of a plurality of NWs.With this configuration, for example, the UE can promptly connect to one of the plurality of NWs. As a result, paging collision can be promptly avoided.

The UE may perform the notification by using NAS signaling. The UE may include the NAS signaling in RRC signaling, for example, RRC setup complete (RRCSetupComplete), for notification.The gNB may extract the NAS signaling from the RRC signaling.The gNB may forward the NAS signaling to the AMF.For the forwarding, signaling in the N2 interface, for example, INITIAL UE TRANSFER disclosed in Non-Patent Document 26 (TS 38.413), may be used.For the forwarding, new signaling may be provided.With this configuration, for example, the UE can perform notification of information related to paging collision in the first NAS signaling after RRC setup.As a result, the AMF can promptly acquire the information related to paging collision.

As another example, new NAS signaling may be provided.For example, signaling of UE configuration update request (UE configuration update request) from the UE to the AMF may be provided.The UE may perform the notification to the AMF by using the newly provided NAS signaling.

The UE may perform the notification to the AMF of one NW.With this configuration, for example, in the communication system, paging collision avoidance can be executed with a small signaling amount.As another example, the UE may perform the notification to the AMFs of a plurality of NWs.With this configuration, for example, in the communication system, flexibility of paging timing change can be enhanced.

The UE may notify the AMF of information used for paging collision avoidance.The UE may include the information in the notification.The information may include the information of (1) to (10) above.The information may further include information related to its own NW.The information related to its own NW may be such information that another NW is interpreted as its own NW regarding the information of (1) to (10) above.With this configuration, for example, the AMF can acquire all the parameters necessary for paging timing derivation of the UE.As a result, paging collision in the UE can be securely avoided.The AMF may change the identifier of the UE by using the information related to its own NW.With this configuration, for example, paging collision in the changed identifier of the UE can be prevented.

The AMF may change the identifier of the UE by using the signaling. The AMF may notify the UE of the changed identifier.For the notification, NAS signaling, for example, configuration update command (CONFIGURATION UPDATE COMMAND) disclosed in Non-Patent Document 27 (TS 24.501), may be used.The identifier may be, for example, a 5G S-temporary mobile subscription identifier (5G-S-TMSI) disclosed in Non-Patent Document 22 (TS 23.501).The UE may update the UE-ID of the UE by using the notification.

The UE may notify the AMF of completion of identifier update of the UE. For the notification, NAS signaling, for example, configuration update complete (CONFIGURATION UPDATE COMPLETE) disclosed in Non-Patent Document 27 (TS 24.501), may be used.

The AMF may notify the base station of the changed identifier.For the notification, signaling in the N2 interface may be used.The base station may update the UE-ID by using the notification.The base station may change the paging timing by using the notification.The base station may or may not change the parameter used for determination of the paging timing by using the changed identifier of the UE.With this configuration, for example, flexibility of paging timing change in the UE can be enhanced.The notification of the changed parameter from the base station to the UE may be the same as that described above.

The UE may notify the AMF of another NW of the changed parameter that is notified from the AMF.The UE may include information related to the identifier of the UE in the notification to the AMF of the another NW.The identifier may be an identifier allocated in the NW of the AMF that changed the parameter. The AMF of the another NW may or may not change paging timing in the another NW by using the parameter.With this configuration, for example, the paging timing in the another NW can be changed, avoiding the notified parameter.As a result, paging collision after paging timing change can be prevented.

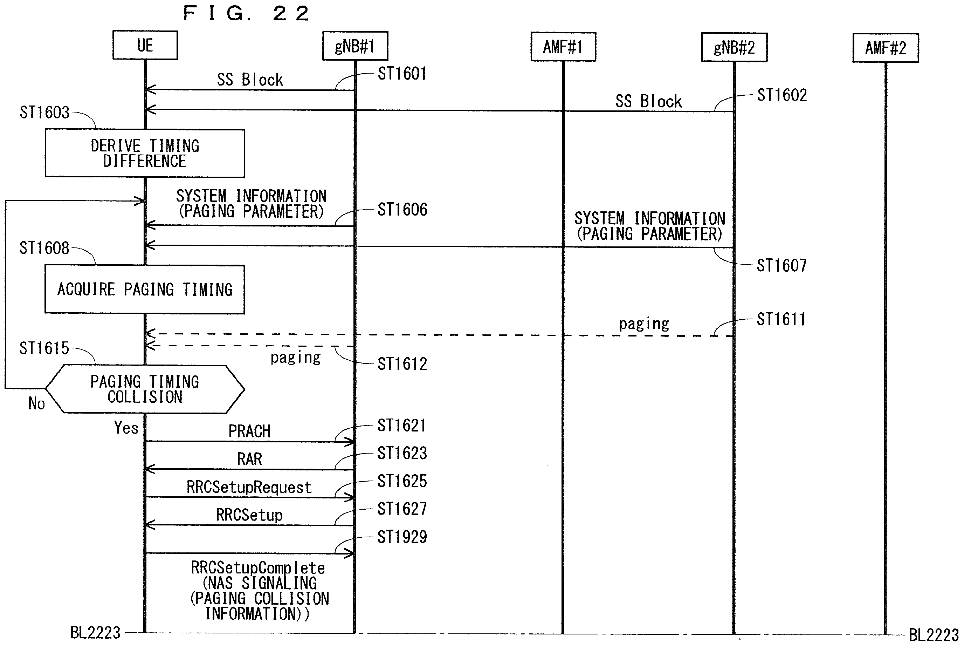

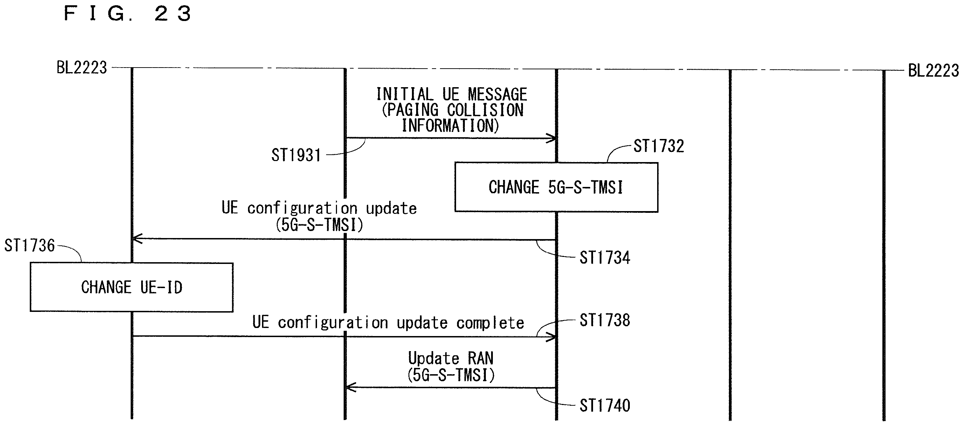

FIG. 22 and FIG. 23 are each a sequence diagram illustrating an example of operation in which the multi-SIM UE detects paging collision and notifies the AMF.FIG. 22 and FIG. 23 are connected at the position of a boundary line BL2223.In FIG. 22 and FIG. 23, the UE is connected to two NWs (NW #1 and NW #2), and are connected to gNB #1 under NW #1 and gNB #2 under NW #2.In FIG. 22 and FIG. 23, AMF #1 and AMF #2 respectively exist under NW #1 and NW #2.In the example illustrated in FIG. 22 and FIG. 23, the UE is in the RRC_IDLE state for both of gNB #1 and gNB #2.FIG. 22 and FIG. 23 illustrate an example in which the UE notifies AMF #1 of paging collision via gNB #1.In FIG. 22 and FIG. 23, processes the same as those of FIG. 16 to FIG. 19 are denoted by the same step numbers, and common description is omitted.

Steps ST1601 to ST1627 illustrated in FIG. 22 are the same as those of FIG. 16.

In Step ST1929 illustrated in FIG. 22, the UE notifies gNB #1 of completion of RRC setup.For the notification, RRC signaling, for example, RRC setup complete (RRCSetupComplete) of Non-Patent Document 24 (TS 38.331) may be used.The UE may include NAS signaling in the notification of Step ST1629.The UE may include information related to paging collision in the NAS signaling.For example, the information may include information as to whether or not there is paging collision, or may include the information of (1) to (10) above disclosed as an example of information used for paging collision avoidance.

In Step ST1931 illustrated in FIG. 23, gNB #1 forwards the NAS signaling received from the UE to AMF #1.For the forwarding, signaling in the N2 interface, for example, INITIAL UE TRANSFER disclosed in Non-Patent Document 26 (TS 38.413), may be used.For the forwarding, new signaling may be provided.By receiving the signaling of Step ST1931, AMF #1 recognizes occurrence of paging collision.

Steps ST1732 to ST1740 illustrated in FIG. 23 are the same as those of FIG. 19.

FIG. 23 illustrates a case in which gNB #1 does not change a parameter related to paging timing; however, gNB #1 may change the parameter.In this case, Steps ST1631 to ST1635 illustrated in FIG. 19 may be performed.With this configuration, for example, in the communication system, flexibility of paging timing change can be enhanced.

Another base station may acquire information related to paging collision.The another base station may be, for example, a base station of a handover destination (which may be hereinafter referred to as a target base station) of the UE.A base station of a handover source (which may be hereinafter referred to as a source base station) may notify the target base station of information related to paging collision.The information may be, for example, the information of (1) to (10) above.With this configuration, for example, even after the UE performs handover, paging collision can be prevented.

The source base station may perform the notification by using signaling in the inter-base station interface (for example, the Xn interface), for example, signaling of handover request (HANDOVER REQUEST) disclosed in Non-Patent Document 28 (TS 38.423).With this configuration, for example, the source base station can promptly notify the target base station of the information.

As another example, the UE may notify the target base station of the information.The UE may perform the notification by using the above-described RRC signaling, for example, the signaling of RRC reconfiguration complete.With this configuration, for example, the signaling amount in the inter-base station interface can be reduced.

The UE may notify the base station with the earliest PRACH transmission timing among the base stations of the NWs to which the UE connects of the information related to paging collision.With this configuration, for example, the UE can promptly notify the NW of paging collision.

As another example, the UE may configure a primary NW, or may configure a secondary NW. The UE may perform the notification to the base station and/or the AMF of the primary NW, or may perform the notification to the base station and/or the AMF of the secondary NW.With this configuration, in designing of the communication system, complexity of processing for performing notification of the information related to paging collision can be avoided.

A person may perform the configuration of the primary NW and/or the secondary NW for the UE.For example, the configuration of the primary NW and the secondary NW is performed according to a preference of the person.With this configuration, the NW of the preference of the person can be caused to perform paging collision avoidance.The configuration of the primary NW and/or the secondary NW may be stored in the UE in advance. The UE can use the configuration of the primary NW and/or the secondary NW any time.

The UE may process processing of paging from a plurality of NWs in order of arrival.With this configuration, for example, complexity of design of the UE can be avoided.

As another example, the UE may perform processing for paging that arrives late prior to paging that arrives earlier.The above-described operation may be, for example, performed when the UE receives late-arriving paging having high priority while the UE processes early-arriving paging.The base station may include information indicating priority in paging to notify the UE of the information. The UE may determine whether or not processing of the late-arriving paging can be performed by using the information. With this configuration, for example, communication having high priority can be promptly started. As a result, QoS in the communication system can be secured.

Another solution is disclosed.The UE may receive paging from a plurality of NWs by means of time division.The paging from a plurality of NWs may be transmitted by means of time division.The UE may receive paging from each NW by using the paging timing being subjected to time division multiplexing.With this configuration, for example, power consumption in the UE can be reduced.

The UE may determine a method of time division multiplexing of paging.The UE may notify the base station that the UE receives paging being subjected to time division multiplexing.The UE may perform the notification to the base station of one NW, may perform the notification to the base stations of a plurality of NWs, or may perform the notification to the base stations of all of the NWs of connection destinations.

The notification method from the UE to the base station may be the same as the notification method of information related to paging collision from the UE to the base station in the solution described above.The base station may include information of paging to the UE only at paging timing received by the UE by using the notification.With this configuration, for example, power consumption in the base station can be reduced, and the number of UEs that can be accommodated in paging can be increased.

The notification from the UE to the base station may include information related to paging timing after time division multiplexing.The information may include, for example, the information of (2) and/or (5) above disclosed as the information related to paging collision.As the information of (5) above, for example, information related to the period of paging may be used.For example, as the information related to the period of paging, a discontinuous reception (DRX) period (T) of the UE or a total number (N) of paging frames in the period, which are disclosed in Non-Patent Document 25 (TS 38.304), may be used.

As another example, the information may include information related to paging timing that ultimately is not allocated due to time division multiplexing. The paging timing may be a paging frame (PF), a paging occasion (PO), or a PDCCH monitoring occasion used for paging reception ultimately not allocated due to time division multiplexing, or may be a combination of two or more of the above.

As another example, the UE may determine the method of time division multiplexing of paging.The UE may not notify the base station that the UE receives paging being subjected to time division multiplexing.The UE may receive paging from each NW
by using a paging time division multiplexing method determined by the UE.With this configuration, for example, complexity of design of the communication system can be avoided.

As another example, the base station may determine the method of time division multiplexing of paging. The base station may be, for example, a base station of the primary NW. The UE may request the base station to perform time division multiplexing of paging. Determination by the base station may be performed in response to the request from the UE, or may be performed without the request from the UE. The base station may notify the base station of another NW of information of time division multiplexing of paging.

The notification may be performed via the UE. The base station may perform the notification by using RRC signaling, by using MAC signaling, or by using L1/L2 signaling. The UE may perform the notification to the base station of another NW by using RRC signaling, by using MAC signaling, or by using L1/L2 signaling.With this configuration, for example, determination of the method of time division multiplexing of paging in the UE becomes unnecessary. As a result, complexity of design can be avoided.

The base station that determines the method of time division multiplexing of paging may be the base station of one NW, or may be the base stations of a plurality of NWs.The UE may transmit the request to the base station of one NW, or may transmit the request to the base stations of a plurality of NWs.With the base stations of a plurality of NWs determining the method, for example, determination operation of the time division multiplexing method of paging in the communication system can be promptly started.

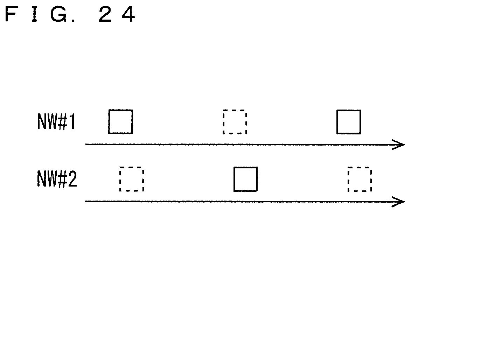

FIG. 24 is a diagram illustrating the first example of time division multiplexing of paging.In FIG. 24, the UE is connected to two NWs (NW #1 and NW #2).In FIG. 24, solid-line and broken-line squares each represent paging timing before time division multiplexing in each NW.In FIG. 24, as a result of time division multiplexing, the UE may not receive paging from the NW at the timings of the broken-line squares.In the example illustrated in FIG. 24, paging from NW #1 and paging from NW #2 are transmitted in the same period.In the example illustrated in FIG. 24, the UE may receive paging from NW #1 and NW #2 alternately.

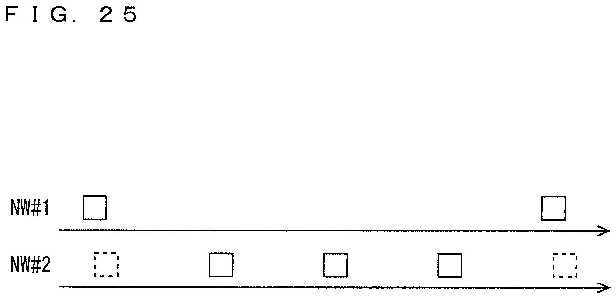

FIG. 25 illustrates the second example of time division multiplexing of paging.In FIG. 25, the UE is connected to two NWs (NW #1 and NW #2).In FIG. 25, solid-line and broken-line squares each represent paging timing before time division multiplexing in each NW.In FIG. 25, as a result of time division multiplexing, the UE may not receive paging from the NW at the timings of the broken-line squares.In the example illustrated in FIG. 25, paging from NW #1 is transmitted in a period larger than paging from NW #2.In the example illustrated in FIG. 25, when paging from NW #1 and NW #2 overlaps, the UE may receive paging from NW #1.

Another solution is disclosed.The base station may detect paging collision.The base station may be the base station of one NW, or may be the base stations of a plurality of NWs to which the UE connects. The UE may notify the base station of the identifier of the UE in another NW.The notification may include information related to the cell, for example, a PCI, to which the UE connects in another NW.The base station may acquire information related to paging in the another NW The acquisition of the information in the base station may be performed through acquisition of broadcast information from the base station of the another NW, or may be performed through notification from the UE to the base station.With this configuration, for example, in the UE, the processing amount related to paging collision can be reduced.

The method disclosed in the first embodiment may be applied to paging collision between the NR base station and the LTE base station.The LTE base station and/or the NW to which the LTE base station connects may change only the identifier of the UE.With this configuration, for example, complexity of design in the communication system can be avoided.As another example, the LTE base station and/or the NW to which the LTE base station connects may be capable of change, with other parameters related to paging being included as well.With this configuration, for example, flexibility of paging timing change can be enhanced.The notification from the UE to the NR base station and/or the AMF and the notification from the UE to the LTE base station and/or the MME may be the same as those in the solution described above.The notification from the UE to the AMF connected to the NR base station and the notification from the UE to the MME connected to the LTE base station may be the same as those in the solution described above as well.With this configuration, for example, the UE can avoid paging collision between the NR base station and the LTE base station.

The UE may notify the NR base station of paging collision.With this configuration, for example, in the communication system, paging timing of the UE can be flexibly changed.

As another example, the UE may notify the LTE base station and/or the MME of paging collision.With this configuration, for example, the signaling amount between the UE and the NR base station can be reduced. As a result, communication speed in the communication system can be secured.

The method disclosed in the first embodiment may be applied to paging collision between the LTE base stations.The notification from the UE to the LTE base station and/or the MME may be the same as that in the solution described above.With this configuration, for example, paging collision between the LTE base stations can be avoided.The LTE base station and/or the NW to which the LTE base station connects may change only the identifier of the UE.With this configuration, for example, complexity of design in the communication system can be avoided.As another example, the LTE base station and/or the NW to which the LTE base station connects may be capable of change, with other parameters related to paging being included as well.With this configuration, for example, flexibility of paging timing change can be enhanced.

The UE may include a plurality of RRCs.For example, when the UE is the multi-SIM UE, the UE may be permitted to include a plurality of RRCs.For example, the UE may include the RRC for each base station of a plurality of NWs.With this configuration, for example, control between the UE and each base station is facilitated.

As another example, the UE may include the RRC for each transceiver.The same may also apply to a case in which the numbers of transmitters and receivers included in the UE are different.For example, the UE may include the RRC for each transmitter included in the UE, or may include the RRC for each receiver included in the UE.Of the number of transmitters and the number of receivers included in the UE, the UE may include the RRC for the larger number, or may include the RRC for the smaller number.With this configuration, for example, each transceiver of the UE can be easily controlled.

As another example, the UE may include only one RRC.For example, even when the UE is the multi-SIM UE, only one RRC may be included.The same may also apply to a case in which the UE includes a plurality of transceivers. The same may also apply to a case in which the numbers of transmitters and receivers included in the UE are different.For example, when the UE includes only one transmitter, the UE may include only one RRC.For example, when the UE includes only one receiver, the UE may include only one RRC.With this configuration, for example, control between the UE and the base stations of a plurality of NWs, for example, adjustment of resources of frequency, time, and/or power among the base stations of a plurality of NWs is facilitated.

The UE may include a plurality of RRC states.For example, when the UE is the multi-SIM UE, the UE may be permitted to include a plurality of RRC states.For example, the RRC may be included for each base station of a plurality of NWs.The UE may include one RRC state for one RRC, and may include a plurality of RRC states for one RRC.With this configuration, for example, the communication system can easily control a connection state between the base stations.

As another example in which the UE includes a plurality of RRC states, the RRC state may be included for each transceiver.The same may also apply to a case in which the numbers of transmitters and receivers included in the UE are different.For example, the UE may include the RRC state for each transmitter included in the UE, or may include the RRC state for each receiver included in the UE.Of the number of transmitters and the number of receivers included in the UE, the UE may include the RRC state for the larger number, or may include the RRC state for the smaller number.With this configuration, for example, an operation state of each transceiver of the UE can be easily controlled.

The plurality of RRC states included in the UE may be independent of each other.For example, when the UE includes a plurality of transceivers, the plurality of RRC states may be independent of each other.As another example, when the UE includes a single transceiver, the plurality of RRC states may be independent of each other.With this configuration, for example, flexibility in the communication system can be enhanced.

As another example, the plurality of RRC states included in the UE may have interdependency.For example, when the RRC state with the base station of one NW transitions to RRC_CONNECTED, the RRC state with the base station of another NW may transition to RRC_CONNECTED.As another example, when the RRC state with the base station of one NW transitions to RRC_IDLE or RRC_INACTIVE, the RRC state with the base station of another NW may transition to RRC_IDLE or RRC_INACTIVE.For example, when the UE includes one transceiver, the UE may have interdependency between a plurality of RRC states.As another example, when the UE includes a plurality of transceivers, the UE may have interdependency between a plurality of RRC states.With this configuration, for example, control of the RRC state in the communication system is facilitated.

The UE may include only one RRC state.With this configuration, for example, an operation state of the UE can be easily controlled.

The method disclosed in the first embodiment may be applied to reception of the SS block and/or the system information.For example, the UE may receive the SS block from the base stations of the plurality of NWs by means of time division.As another example, the UE may request collision avoidance of system information transmission timing from the base station of one NW.The base station may change the system information transmission timing by using the request.With this configuration, for example, regarding the SS block and/or system information as well, transmission timing collision can be avoided.

According to the first embodiment, overlap of paging between the NWs can be avoided.

### First Modification of First Embodiment

The same method as that of the first embodiment may be applied to the communication system in which a plurality of NWs share the same base station.

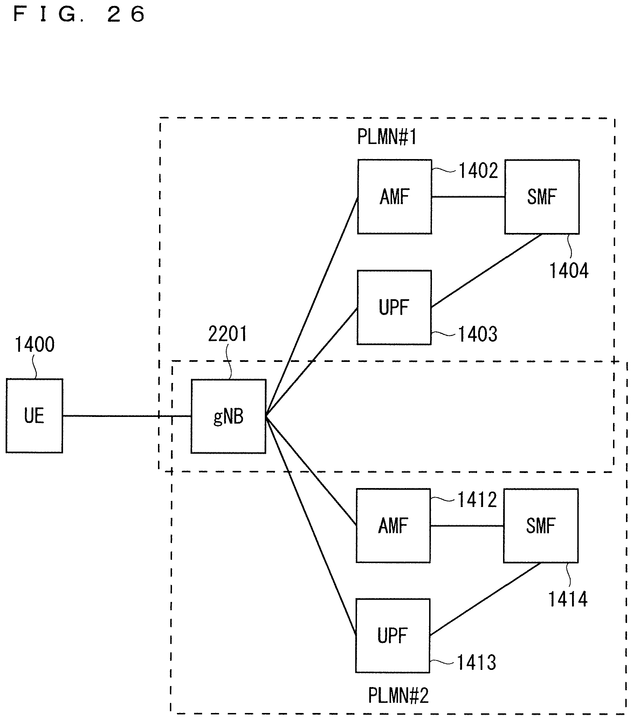

FIG. 26 is an architecture diagram illustrating an example of connection between the multi-SIM UE and a plurality of NWs in the communication system in which the plurality of NWs share the same base station.In FIG. 26, PLMN #1 and PLMN #2 share the same base station 2201.In FIG. 26, the multi-SIM UE is connected to PLMN #1 and PLMN #2 in parallel.

In the example illustrated in FIG. 26, the UE 1400 connects to the gNB 2201. The gNB 2201 connects to AMF 1402 and the UPF 1403 in PLMN #1.The SMF 1404 in PLMN #1 connects to the AMF 1402 and the UPF 1403. The gNB 2201 connects to an AMF 1412 and a UPF 1413 in PLMN #2.An SMF 1414 in PLMN #2 connects to the AMF 1412 and the UPF 1413.

The example illustrated in FIG. 26 illustrates a case in which the UE 1400 connects to two PLMNs; however, the UE 1400 may connect to three or more PLMNs.Further, among the two NWs to which the UE 1400 connects, one or two or more may be NPN(s).The same may also apply to a case in which the UE 1400 connects to three or more NWs.

The UE may notify the base station of paging timing collision between a plurality of NWs.The notification may be the same as the notification disclosed in the first embodiment.As another example, the UE may notify the AMF of paging timing collision between a plurality of NWs.The AMF may be the AMF of one NW, or may be the AMF of a plurality of NWs.The notification from the UE to the AMF may be the same as the notification disclosed in the first embodiment.With this configuration, for example, also in the communication system in which a plurality of NWs share a base station, paging collision can be avoided.

Another solution is disclosed.The base station may detect paging timing collision.The base station may change the paging parameter in each NW.The base station may broadcast the changed parameter to the UE, or may individually notify the UE of the changed parameter.

The UE may notify the base station of the identifier of the UE allocated by each NW.With this configuration, for example, the base station can identify the identifier of the UE in each NW as the identifier of the same UE.As a result, the base station can execute parameter change for paging collision avoidance.The identifier may be a UE_ID, or may be a 5G-S-TMSI.With this configuration, for example, the signaling amount in the notification from the UE to the base station can be reduced.As another example, the identifier may be a 5G-TMSI.With this configuration, for example, the UE can simultaneously notify the base station of the identifiers of the NWs. As a result, the identification in the base station can be promptly executed.As another example, the identifier may be a 5G-GUTI.

As another example, the base station may acquire the identifier of the UE allocated by each NW by using NAS signaling between the UE and the AMF of each NW.For example, the base station may acquire the identifier in the NW of the UE by using NAS signaling related to registration with each NW of the UE.The base station may be able to decode the NAS signaling.With this configuration, for example, signaling between the UE and the base station can be reduced.

The base station may request the AMF to change the identifier of the UE.The request may be the same as the request of change of the UE identifier from the base station to the AMF disclosed in the first embodiment.The AMF may change the identifier of the UE by using the request.The AMF may notify the UE of change of the UE identifier.For the notification, NAS signaling, for example, configuration update command (CONFIGURATION UPDATE COMMAND) disclosed in Non-Patent Document 27 (TS 24.501), which is disclosed in the first embodiment, may be used.

The UE may notify the AMF of completion of identifier update of the UE. Similarly to the first embodiment, for the notification, NAS signaling, for example, configuration update complete (CONFIGURATION UPDATE COMPLETE) disclosed in Non-Patent Document 27 (TS 24.501), may be used.

The AMF may notify the base station of the changed identifier. Similarly to the first embodiment, for the notification, signaling in the N2 interface may be used.The base station may or may not change the paging timing of the UE by using the notification.

Another solution is disclosed.Information related to the NW may be included in paging.The information related to the NW may be, for example, an identifier indicating the PLMN and/or the NPN.The information may be information indicating relation between the paging information and information related to the NW.The information related to the NW and the paging information may be associated with each other as the paging information.The UE can recognize to which NW the received paging information corresponds.

The base station may transmit paging of any one NW.For example, the base station may transmit paging of the primary NW.The above-described information related to the NW is included in the paging. With this configuration, by receiving paging at the paging timing of one NW, the UE can acquire paging information of a plurality of NWs.

The base station may broadcast information for specifying the one NW.The information for specifying one NW may be, for example, the identifier of the NW.The base station may individually notify the UE of the information for specifying the one NW.For example, RRC signaling may be used for the notification.Further, the base station may broadcast information related to paging timing of the one NW.Alternatively, the base station may individually notify the UE of the information related to paging timing of the one NW.For example, RRC signaling may be used for the notification. With this configuration, the UE can specify one NW, derive paging timing of the NW, and perform paging reception at the paging timing of the NW

With this configuration, it is only necessary that the UE receive paging at the paging timing from one NW, and complexity of paging processing of the UE can be voided.

According to the first modification, also in the communication system in which a plurality of NWs share a base station, paging collision can be avoided.

### Second Modification of First Embodiment

The first embodiment discloses a method of avoidance of paging collision between a plurality of NWs.The second modification discloses a method of contention avoidance of random access.

The UE detects collision of random access between the base stations of a plurality of NWs. Similarly to the first embodiment, the UE may detect collision by using information related to frame timing between the base stations of a plurality of NWs, or may detect collision by using system information received from the plurality of base stations, for example, system information related to random access.Both of the above may be combined together.

The UE notifies the base station of one NW of information related to collision of random access.The base station may be, for example, the base station of the primary NW disclosed in the first embodiment.The base station may change timing of random access to the UE by using the notification from the UE.For example, the timing of random access may be PRACH transmission timing from the UE, or may be timing of the RAR received by the UE.The base station may broadcast the changed timing to the UE.

The base station may change a preamble of random access.The base station may notify the UE of information related to the changed preamble.The UE may transmit the PRACH to the base station by using the changed preamble.With this configuration, for example, the base station of another NW can be prevented from falsely recognizing the PRACH from the UE to the base station as the PRACH for its own base station.Further, the base station can also be prevented from falsely recognizing the PRACH from the base station of another NW as the PRACH for its own station.

As the information related to random access processing with the base station of another NW notified by the UE to the base station, the following (1) to (8) are disclosed.
(1) Information related to an identifier of the base station of another NW
(2) Information related to PRACH transmission timing to the base station of another NW
(3) Information related to a numerology of the base station of another NW
(4) Information related to frame timing of the base station of another NW
(5) Information related to RAR reception timing from the base station of another NW
(6) Information related to a beam received from the base station of another NW
(7) Information related to a preamble of the PRACH to the base station of another NW
(8) Combination of (1) to (7) above

For example, the information of (1) above may be a base station identifier of the base station (which may be hereinafter referred to as an inactive base station) that does not perform transmission and reception of data, or may be a cell identifier.With this configuration, for example, the base station (which may be hereinafter referred to as an active base station) that performs transmission and reception of data can recognize an inactive base station from which the UE is to receive a synchronization signal, system information, and/or paging.As a result, complexity related to scheduling by the active base station can be avoided.

The information of (2) above may be information related to start timing of the PRACH transmitted by the UE.The information may be an SFN, a subframe number, a slot number, or a symbol number, or may be a combination of the above. The information may include information related to the length of the PRACH transmitted by the UE, or may include information related to end timing of the PRACH.With this configuration, for example, the UE can perform notification of information related to the PRACH transmitted by the UE with a small signaling amount.

As another example, the information of (2) above may include information related to time of the PRACH transmitted by the UE.For example, the information related to time may include time at the start point of the PRACH, may include time related to the end point of the PRACH, may include information related to the length of the PRACH, or may include a plurality of pieces of information described above.With this configuration, for example, the processing amount in random access collision avoidance by the base station can be reduced.

For example, the information of (3) above may be a subcarrier spacing, a slot length, or a symbol length used by the UE in random access processing with the base station of another NW, or may be a parameter µ disclosed in Section 4.2 of Non-Patent Document 13 (TS 38.211).With this configuration, for example, reliability in the avoidance processing by the base station can be enhanced.

The information of (4) above may be the same as the information of (4) above used for paging collision avoidance disclosed in the first embodiment.The information may be, for example, information related to the difference of the frame timings between the base station and the base station of another NW.With this configuration, for example, the processing amount in avoidance processing by the base station can be reduced.As another example, it may be a predetermined time point in the base station of another NW, for example, time at the boundary of a predetermined SFN.With this configuration, for example, the processing amount required for the notification of the UE can be reduced.

For example, the information of (5) above may include information related to the start point of the RAR reception timing, may include information related to the end point, or may include information related to the length of the RAR reception timing. The information may have the same format as that of (2) above, for example.As another example, the information of (5) above may be ra-ResponseWindow disclosed in Non-Patent Document 24.With this configuration, for example, in the UE, collision of transmission and reception with the base station and timing of the RAR from the base station of another NW can be prevented.

The information of (6) above may be information related to a beam used by the UE to receive the SS block from the base station of another NW.The information may be, for example, an identifier of the SS block in the SS burst.The base station may not perform transmission and reception with the UE only at the timing of random access corresponding to the SS block received by the UE by using the information.With this configuration, for example, a communication rate between the UE and the base station can be enhanced.

The information of (7) above may include, for example, information related to a preamble of the PRACH transmitted by the UE to the base station of another NW.The base station may allocate a preamble different from the preamble for PRACH transmission for its own base station to the UE by using the information.With this configuration, for example, the base station can be prevented from falsely recognizing the PRACH transmitted from the UE to the base station of another NW as the PRACH for its own base station.

Another solution is disclosed.The UE may transmit the PRACH to one base station.The UE may not transmit the PRACH to other base stations.The UE may transmit the PRACH to the base station having the earliest first PRACH transmission timing.With this configuration, for example, the UE can promptly establish connection.As another example, the UE may transmit the PRACH to the base station that performs communication having high priority.The UE may determine the base station by using the information of priority included in paging disclosed in the first embodiment, or may determine the base station by using information of priority of uplink communication occurring in the UE.With this configuration, for example, the UE can promptly set up communication having high priority. As a result, QoS of the communication can be secured.

Another solution is disclosed.The UE may transmit the PRACH to a plurality of base stations.The operation of the UE may be, for example, performed when the UE includes a plurality of transceivers. With this configuration, for example, the UE can promptly establish connection with a plurality of base stations.

The UE may distribute power for each base station by using path loss with the base station, may distribute the power by using priority of communication with each base station, or may distribute the power by using both of the above.With this configuration, for example, efficiency in the communication system can be enhanced.

According to the second modification, collision of timings of random access between a plurality of NWs can be avoided.

### Second Embodiment

The multi-SIM UE may perform reception operation of a synchronization signal, system information, and/or paging.The UE may perform the reception operation to the base station (which may be hereinafter referred to as an inactive base station) that does not perform transmission and reception of data.The UE may perform the reception operation by switching transceivers of the UE while the UE connects to the base station (which may be hereinafter referred to as an active base station) that performs transmission and reception of data.The inactive base station may be, for example, a base station corresponding to the RRC in the RRC_IDLE state or the RRC_INACTIVE state.The active base station may be, for example, a base station corresponding to the RRC in the RRC_CONNECTED state. The UE may be a receiver including only one transceiver.

The UE may notify the active base station of information related to timing at which the UE receives a synchronization signal, system information, and/or paging from the inactive base station.The UE may request the active base station to perform paging collision avoidance from the inactive base station.The above-described information may be included in the request.The UE may switch a reception destination to the inactive base station at the timing.

The reception timing may include time required by the UE to switch the transceiver.With this configuration, for example, reliability of operation of receiving a synchronization signal, system information, and/or paging from the inactive base station can be enhanced.

As the above-described information related to the reception timing of which the UE notifies the active base station, in other words, information related to timing at which the UE receives a synchronization signal, system information, and/or paging from the inactive base station, the following (1) to (9) are disclosed.
(1) Information related to an identifier of the inactive base station
(2) Information related to synchronization signal transmission timing of the inactive base station
(3) Information related to a numerology of the inactive base station
(4) Information related to frame timing of the inactive base station
(5) Information used for synchronization signal transmission timing derivation of the inactive base station
(6) Information related to a beam received from the inactive base station
(7) Information related to system information transmission timing of the inactive base station
(8) Information related to paging reception timing from the inactive base station
(9) Combination of (1) to (8) above

For example, the information of (1) above may be a base station identifier of the inactive base station, or a cell identifier.With this configuration, for example, the active base station can recognize an inactive base station from which the UE is to receive a synchronization signal, system information, and/or paging.As a result, complexity related to scheduling by the active base station can be avoided.

The information of (2) above may be, for example, frame timing, for example, an SFN, at which the inactive base station transmits the SS burst.For example, the SFN may be an SFN being the start of the SS burst, or may be an SFN at the end of the SS burst.With this configuration, for example, the processing amount of scheduling in the active base station can be reduced.Further, even when there is a timing offset between the active base station and the inactive base station, a synchronization signal, system information, and/or paging can be received from the inactive base station.

As another example, the information of (2) above may include information related to time at which the inactive base station transmits the SS burst.For example, the information related to time may include time at the start point of the SS burst, may include time related to the end point of the SS burst, or may include information related to duration of the SS burst, or a plurality of pieces of information among above may be included.With this configuration, for example, the processing amount of scheduling in the active base station can be reduced.

For example, the information of (3) above may be a subcarrier spacing, a slot length, or a symbol length used when the UE receives a synchronization signal, system information, and/or paging from the inactive base station, or may be a parameter µ disclosed in Section 4.2 of Non-Patent Document 13 (TS 38.21 1).With this configuration, for example, in scheduling of the active base station, reliability of operation of avoiding the synchronization signal and the like from the inactive base station can be enhanced.

The information of (4) above may be the same as the information of (4) above used for paging collision avoidance disclosed in the first embodiment.The information may be, for example, information related to a difference of frame timings between the active base station and the inactive base station.With this configuration, for example, the processing amount of scheduling in the active base station can be reduced.As another example, the information of (4) above may be a predetermined time point in the inactive base station, for example, time at the boundary of a predetermined SFN.With this configuration, for example, the processing amount required for the notification of the UE can be reduced.

The information of (5) above may include information related to the period of the SS burst, or may include information indicating where the SS burst is included, the first half or the last half of the frame.With this configuration, for example, the processing amount of scheduling in the active base station can be reduced.

The information of (6) above may be information related to a beam used by the UE to receive the SS block from the inactive base station. The information may be, for example, an identifier of the SS block in the SS burst.The active base station may not perform transmission and reception with the UE only at the timing of the SS block received by the UE by using the information. With this configuration, for example, a communication rate between the UE and the active base station can be enhanced.

As another example, the information of (6) above may be information related to candidates of a beam used by the UE to receive the SS block from the inactive base station. The information related to candidates of a beam may be, for example, an identifier of an SS block transmitted using a neighboring beam of the SS block received by the UE.With this configuration, for example, a communication rate between the UE and the active base station can be enhanced. Along with the above, also when a beam of the inactive base station in which the UE exists is changed, the UE can receive the SS block from the inactive base station.

The information of (6) above may be information of a beam used by the UE to receive system information from the inactive base station or candidates of the beam, or may be information related to a beam used for paging reception or candidates of the beam.

The information of (7) above may be, for example, information related to scheduling of system information transmitted by the inactive base station. The information related to scheduling may be, for example, pdcch-ConfigSIB1 disclosed in Non-Patent Document 24 (TS 38.331).With this configuration, for example, the processing amount of scheduling in the active base station can be reduced.

The information of (8) above may be information related to paging timing of the inactive base station.The information may be the same as the information of (2) above used for paging collision avoidance disclosed in the first embodiment.With this configuration, for example, the processing amount of scheduling in the active base station can be reduced.

As another example, the information of (8) above may be information used for paging timing derivation of the inactive base station. The information may be the same as the information of (5) above used for paging collision avoidance disclosed in the first embodiment.With this configuration, for example, the signaling amount from the UE to the active base station can be reduced, and simultaneously, the processing amount of scheduling in the active base station can be reduced.

The UE may transmit the notification to the active base station by using RRC signaling.With this configuration, for example, the UE can notify the active base station of much information.

As another example, the UE may transmit the notification to the active base station by using MAC signaling.With this configuration, for example, the UE can promptly execute the notification, with its reliability being secured owing to HARQ retransmission control.

As another example, the UE may transmit the notification to the active base station by using L1/L2 signaling.With this configuration, for example, the UE can further promptly execute the notification.

As another example, the UE may transmit the notification to the AMF connected to the active base station by using NAS signaling.With this configuration, for example, along with handover of the UE, forwarding of information included in the notification between the base stations becomes unnecessary. As a result, the signaling amount between the base stations can be reduced.

As another example, the above-described methods may be combined together.For example, the UE may notify the active base station of the information of (1) to (5), (7), and/or (8) above by using RRC signaling, and notify the active base station of the information of (6) above by using L1/L2 signaling.With this configuration, for example, much information can be promptly notified from the UE to the active base station.

The active base station may change scheduling for the UE by using the notification from the UE.The change may be, for example, one in which transmission and reception for the UE is not allocated at timing at which the UE receives a synchronization signal, system information, and/or paging from the inactive base station. The active base station may notify the UE of information related to the changed scheduling.For example, the information may be information related to timing at which the UE is to perform PDCCH reception operation, for example, a control resource set (CORESET) allocated to the UE, or may be information related to a configured grant.With this configuration, for example, reliability of communication between the active base station and the UE can be enhanced.

The active base station may change scheduling for the UE by using the notification from the UE.As another modification example, for example, a period in which transmission and reception is not performed between the active base station and the UE may be configured.The active base station may notify the UE of the period. The UE may perform transmission and reception with the inactive base station during the period.In the UE, transmission and reception of the active base station and transmission and reception of the inactive base station can be subjected to time multiplexing.By configuring the period to a relatively long period, the UE need not frequently alternately execute communication with the active base station and communication with the inactive base station.Use efficiency of radio resources can be enhanced.

Using the information received from the active base station, the UE may switch the transceiver of the UE for the use of the inactive base station, or for the use of the active base station.For example, the UE may switch the transceiver of the UE for the use of the inactive base station at the paging reception timing from the inactive base station.With this configuration, for example, the UE can receive paging from the inactive base station.

Another solution is disclosed.The UE may notify the inactive base station of information related to transmission and reception between the UE and the active base station.In the description above, the RRC state of the UE for the inactive base station may transition to RRC_CONNECTED.The inactive base station may change the synchronization signal and/or the paging timing by using the notification.For example, the inactive base station may allocate the synchronization signal and/or the paging timing avoiding the timing that the active base station scheduled for the UE.The change in the inactive base station may be, for example, of the same method as that disclosed in the first embodiment.With this configuration, for example, a communication rate between the active base station and the UE can be secured, and simultaneously, the synchronization signal, the system information, and/or the paging of the inactive base station can be received.

As the information related to transmission and reception between the UE and the active base station of which the UE notifies the inactive base station, the following (1) to (10) are disclosed.
(1) Information related to an identifier of the active base station
(2) Information related to synchronization signal transmission timing of the active base station
(3) Information related to a numerology of the active base station
(4) Information related to frame timing of the active base station
(5) Information used for synchronization signal transmission timing derivation of the active base station
(6) Information related to a beam received from the active base station
(7) Information related to system information transmission timing of the active base station
(8) Information related to paging reception timing from the active base station
(9) Information related to scheduling in the active base station
(10) Combination of (1) to (9) above

The information of (1) to (8) above may be the same as the information of (1) to (8) above disclosed as the above-described information related to the reception timing of which the UE notifies the active base station, in other words, information related to timing at which the UE receives a synchronization signal, system information, and/or paging from the inactive base station.For example, with the information of (8) above, the UE can receive system information change and/or emergency information from the active base station. Along with the above, the inactive base station can change the timing of the synchronization signal, the system information, and/or the paging.

For example, the information of (9) above may be information related to timing at which the UE is to perform PDCCH reception operation of the active base station, for example, a control resource set (CORESET) allocated to the UE, or may be information related to a configured grant from the active base station.With this configuration, for example, the inactive base station can change the timing of the synchronization signal, the system information, and/or the paging without affecting communication between the active base station and the UE.

The UE may use a measurement gap when the UE receives a synchronization signal from the inactive base station.For example, the UE may receive the synchronization signal from the inactive base station by using an already configured measurement gap.Further, for example, the active base station may configure the measurement gap for permitting the UE to perform communication with the inactive base station.

A conventional measurement gap may be used.By making new processing unnecessary, complexity of these processes can be avoided. Alternatively, a new gap may be provided, and as a configuration method thereof, a configuration method of the conventional measurement gap may be used.By providing a new gap, a gap period can be optimally configured for communication with the inactive base station.With this configuration, for example, the UE can maintain a communication rate with the active base station, and can simultaneously establish synchronization of a downlink signal with the inactive base station.

As another example, the UE need not use the measurement gap when the UE receives a synchronization signal from the inactive base station.For example, when the active base station and the inactive base station use the same frequency band for the UE, the measurement gap need not be used.With this configuration, for example, efficiency in the communication system can be enhanced.

The method disclosed in the second embodiment may be used for paging reception from the active base station.For example, at the paging reception timing, the UE may switch the transceiver of the UE from data transmission and reception with the active base station to paging reception from another active base station.With this configuration, for example, the UE can receive system information change and/or emergency information from another active base station.

Another solution is disclosed.The UE may not notify the active base station of information related to reception timing of the synchronization signal, the system information, and/or the paging from the inactive base station.At the reception timing, the UE may switch the transceiver of the UE for the use of the inactive base station.With this configuration, for example, the UE can avoid complexity of processing of receiving a signal from the inactive base station.

In the description above, retransmission of transmission and reception between the active base station and the UE may be performed.The retransmission may be, for example, retransmission regarding transmission and reception that occurs during a period in which the UE switches the transceiver of the UE for the use of the inactive base station. With this configuration, for example, reliability of transmission and reception between the active base station and the UE can be enhanced.

The method disclosed in the second embodiment may be applied to the UE including a plurality of transceivers. The UE may be, for example, connected to one NW using a plurality of transceivers. The UE may be connected to a plurality of base stations in one NW.The UE may form dual connectivity with the plurality of base stations. The UE may switch the transceiver of the UE for the use of the inactive base station at the timing at which the synchronization signal, the system information, and/or the paging is transmitted from the inactive base station in another NW

When the UE forms dual connectivity described above, the transceiver for the use of the secondary base station may be switched for the use of the inactive base station.With this configuration, for example, communication between the UE and a master base station can be maintained. As a result, robustness of the communication system can be maintained.

As another example, the transceiver for the use of the master base station may be switched for the use of the inactive base station.With this configuration, for example, when high-speed communication is performed between the UE and the secondary base station, communication between the UE and the secondary base station can be maintained.As a result, a transmission rate in the communication system can be maintained.

When the transceiver for the use of the master base station is switched for the use of the inactive base station, the secondary base station may serve as the master base station.With this configuration, for example, handover in the UE can be executed with a small signaling amount.

According to the second embodiment, the UE can receive the synchronization signal, the system signal, and/or the paging from the inactive base station.As a result, the UE can promptly resume communication with the base station.

### First Modification of Second Embodiment

In the second embodiment, switch of the transceiver of the UE from the use of the active base station to the use of the inactive base station may be applied to random access processing between the UE and the inactive base station.

The UE may notify the active base station of information related to random access processing with the inactive base station. The information may include information related to timing of the random access processing performed by the UE with the inactive base station.At the timing, the active base station may not allocate transmission and reception timing between the UE and its own base station.

As the information related to the random access processing with the inactive base station of which the UE notifies the active base station, the following (1) to (8) are disclosed.
(1) Information related to an identifier of the inactive base station
(2) Information related to PRACH transmission timing to the inactive base station
(3) Information related to a numerology of the inactive base station
(4) Information related to frame timing of the inactive base station
(5) Information related to RAR reception timing from the inactive base station
(6) Information related to a beam received from the inactive base station
(7) Information related to a preamble of the PRACH to the inactive base station
(8) Combination of (1) to (7) above

The information of (1) above may be the same as (1) of the information related to reception timing (which may be hereinafter referred to as synchronization etc. timing of the inactive base station) of the synchronization signal, the system information, and/or the paging transmitted from the inactive base station disclosed in the second embodiment.

The information of (2) above may be information related to the start timing of the PRACH transmitted by the UE.The information may be an SFN, a subframe number, a slot number, or a symbol number, or may be a combination of the above. The information may include information related to the length of the PRACH transmitted by the UE, or may include information related to end timing of the PRACH.With this configuration, for example, the UE can perform notification of information related to the PRACH transmitted by the UE with a small signaling amount.

As another example, the information of (2) above may include information related to time of the PRACH transmitted by the UE.For example, the information related to time may include time at the start point of the PRACH, may include time related to the end point of the PRACH, may include information related to the length of the PRACH, or may include a plurality of pieces of information described above. With this configuration, for example, the processing amount of scheduling in the active base station can be reduced.

The information of (3) and (4) above may be respectively the same as (3) and (4) of synchronization etc. timing information of the inactive base station.

For example, the information of (5) above may include information related to the start point of the RAR reception timing, may include information related to the end point, or may include information related to the length of the RAR reception timing. The information may have the same format as that of (2) above, for example.As another example, the information of (5) above may be ra-ResponseWindow disclosed in Non-Patent Document 24.With this configuration, for example, in the UE, collision of transmission and reception with the active base station and timing of the RAR from the inactive base station can be prevented.

The information of (6) above may be the same as (6) of the synchronization etc. timing information of the inactive base station.

The information of (7) above may include, for example, information related to a preamble of the PRACH transmitted by the UE to the inactive base station. The active base station may allocate a preamble different from the preamble for PRACH transmission for its own base station to the UE by using the information. With this configuration, for example, the active base station can be prevented from falsely recognizing the PRACH transmitted from the UE to the inactive base station as the PRACH for its own base station.

Similarly to the second embodiment, the UE may perform the notification by using RRC signaling, by using MAC signaling, or by using L1/L2 signaling. As another example, the UE may perform the notification to the AMF connected by the active base station by using NAS signaling.

The active base station may not perform uplink and/or downlink scheduling to the UE at PRACH transmission timing from the UE to the inactive base station and/or RAR transmission timing from the inactive base station to the UE by using the notification.Further, at the timing, transmission and reception for the UE may not be allocated.

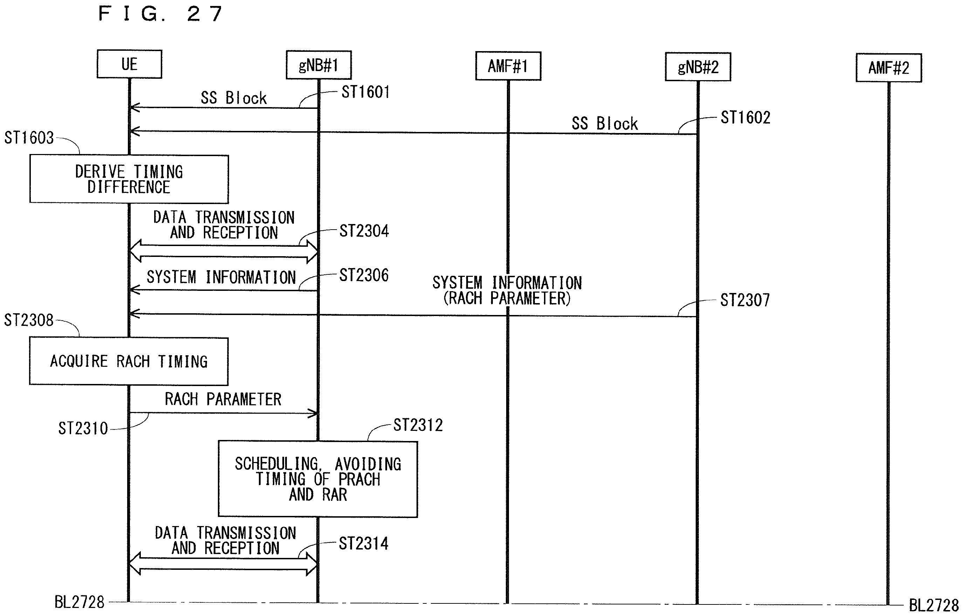

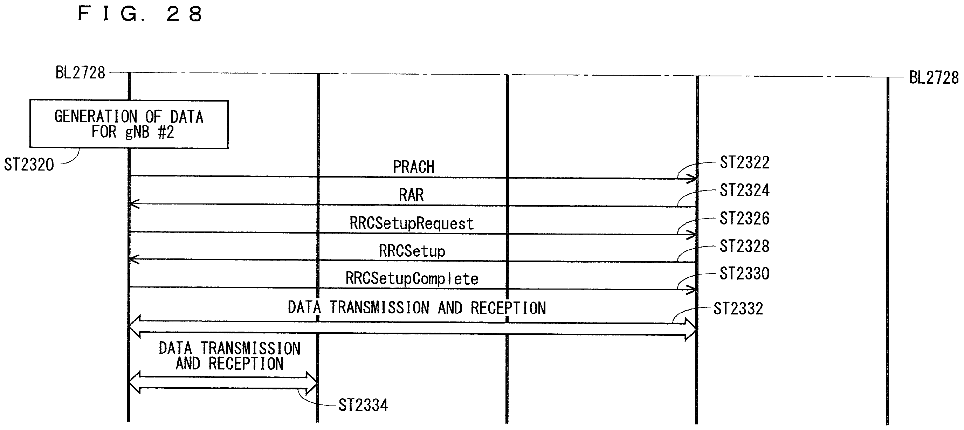

FIG. 27 and FIG. 28 are each a sequence diagram illustrating the first example of operation in which the multi-SIM UE performs random access processing with the inactive base station.FIG. 27 and FIG. 28 are connected at the position of a boundary line BL2728.In FIG. 27 and FIG. 28, the UE is connected to two NWs (NW #1 and NW #2), and are connected to gNB #1 under NW #1 and gNB #2 under NW #2.In FIG. 27 and FIG. 28, AMF #1 and AMF #2 respectively exist under NW #1 and NW #2.In the example illustrated in FIG. 27 and FIG. 28, gNB #1 is an active base station, and gNB #2 is an inactive base station.In FIG. 27 and FIG. 28, processes the same as those of FIG. 16 and FIG. 17 are denoted by the same step numbers, and common description is omitted.

Steps ST1601 to ST1603 illustrated in FIG. 27 are the same as those of FIG. 16.

In Step ST2304 illustrated in FIG. 27, transmission and reception of data between the UE and gNB #1 is performed.

In Step ST2306 illustrated in FIG. 27, gNB #1 broadcasts system information to the UE.In Step ST2307, gNB #2 broadcasts system information to the UE.The broadcast of Step ST2307 includes a parameter related to PRACH transmission for gNB #2, for example, information related to PRACH transmission timing.The broadcast of Step ST2307 may include information related to RAR transmission from gNB #2.

In Step ST2308 illustrated in FIG. 27, the UE acquires RACH timing in gNB #2.

In Step ST2310 illustrated in FIG. 27, the UE notifies gNB #1 of information related to the RACH with gNB #2.In Step ST2312, gNB #1 performs scheduling for the UE, avoiding transmission timing of the PRACH and the RAR between the UE and gNB #2.

In Step ST2314 illustrated in FIG. 27, transmission and reception of data between the UE and gNB #1 is performed.The data transmission and reception of Step ST2314 is performed avoiding the transmission timing of the PRACH and the RAR between the UE and gNB #2.

It is assumed that, in Step ST2320 illustrated in FIG. 28, uplink data from the UE to gNB #2 is generated.

In Step ST2322 illustrated in FIG. 28, the UE transmits the PRACH to gNB #2.gNB #1 does not perform scheduling for the UE at the timing of Step ST2322.

In Step ST2324 illustrated in FIG. 28, gNB #2 transmits the RAR to the UE.gNB #1 does not perform scheduling for the UE at the timing of Step ST2324.

In Step ST2326 illustrated in FIG. 28, the UE requests gNB #2 to set up the RRC.The request may be performed using RRC signaling, for example, RRC setup request (RRCSetupRequest) of Non-Patent Document 24 (TS 38.331).In Step ST2328, gNB #2 commands the UE to perform RRC setup.For the command, RRC signaling, for example, RRC setup (RRCSetup) of Non-Patent Document 24 (TS 38.331) may be used.In Step ST2330 illustrated in FIG. 28, the UE notifies gNB #2 of completion of RRC setup.For the notification, RRC signaling, for example, RRC setup complete (RRCSetupComplete) of Non-Patent Document 24 (TS 38.331) may be used.With Step ST2330, RRC connection between the UE and gNB #2 is established.

In Step ST2332 illustrated in FIG. 28, transmission and reception of data is performed between the UE and gNB #2.In Step ST2334 illustrated in FIG. 28, transmission and reception of data between the UE and gNB #1 is performed.

As another example, the UE may perform the notification to the active base station after uplink data generation for the inactive base station.With this configuration, for example, scheduling avoiding the transmission timing of the PRACH and the RAR performed by the active base station can be executed after the uplink data generation.As a result, communication efficiency between the UE and the active base station can be enhanced.

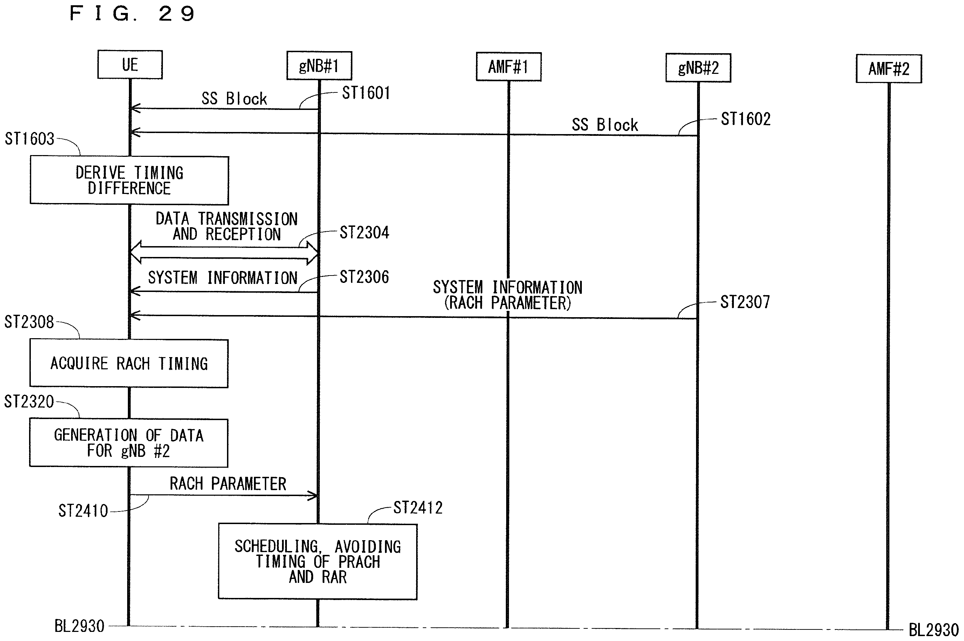

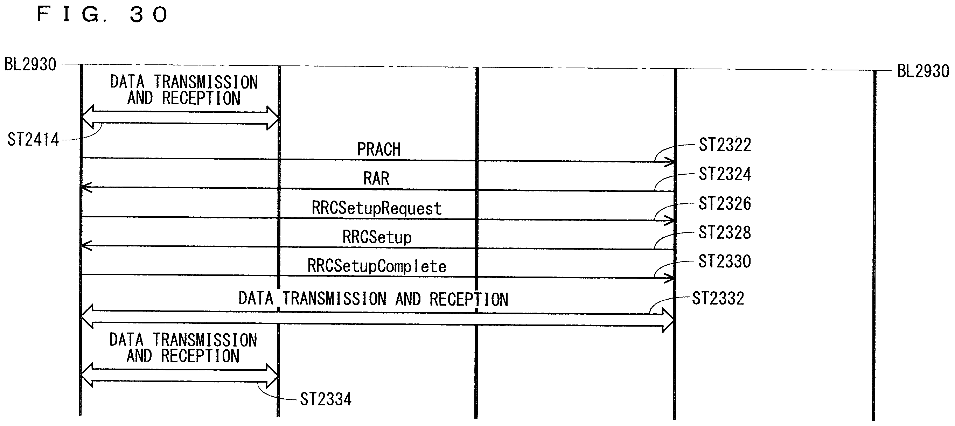

FIG. 29 and FIG. 30 are each a sequence diagram illustrating the second example of operation in which the multi-SIM UE performs random access processing with the inactive base station.FIG. 29 and FIG. 30 are connected at the position of a boundary line BL2930.In FIG. 29 and FIG. 30, the UE is connected to two NWs (NW #1 and NW #2), and are connected to gNB #1 under NW #1 and gNB #2 under NW #2.In FIG. 29 and FIG. 30, AMF #1 and AMF #2 respectively exist under NW #1 and NW #2.In the example illustrated in FIG. 29 and FIG. 30, gNB #1 is an active base station, and gNB #2 is an inactive base station.In FIG. 29 and FIG. 30, processes the same as those of FIG. 16 to FIG. 17 and FIG. 27 to FIG. 28 are denoted by the same step numbers, and common description is omitted.

Steps ST1601 to ST1603 illustrated in FIG. 29 are the same as those of FIG. 16.Steps ST2304 to ST2308 and ST2320 illustrated in FIG. 29 are the same as those of FIG. 27.

In Step ST2410 illustrated in FIG. 29, the UE notifies gNB #1 of information related to the RACH with gNB #2.The UE may perform Step ST2410 after Step ST2320.In Step ST2412, gNB #1 performs scheduling for the UE, avoiding transmission timing of the PRACH and the RAR between the UE and gNB #2.

In Step ST2414 illustrated in FIG. 30, transmission and reception of data between the UE and gNB #1 is performed.The data transmission and reception of Step ST2414 is performed avoiding the transmission timing of the PRACH and the RAR between the UE and gNB #2.

Steps ST2322 to ST2334 illustrated in FIG. 30 are the same as those of FIG. 28.

As another example, the active base station may stop data transmission and reception between the UE and the active base station during the random access processing between the UE and the inactive base station. The UE may notify the active base station of start of the random access processing. The active base station may stop data transmission and reception with the UE by using the notification. The UE may notify the active base station of end of the random access processing. The active base station may resume data transmission and reception with the UE by using the notification.With this configuration, for example, the random access processing between the UE and the inactive base station can be promptly executed.

The UE may transmit the notification to the active base station by using L1/L2 signaling.With this configuration, for example, the UE can promptly perform notification of the notification.As another example, the UE may perform notification of the notification by using MAC signaling.With this configuration, for example, reliability of the notification can be secured owing to HARQ retransmission control. As another example, the UE may perform notification of the notification by using RRC signaling.With this configuration, for example, the UE can notify the active base station of much information.

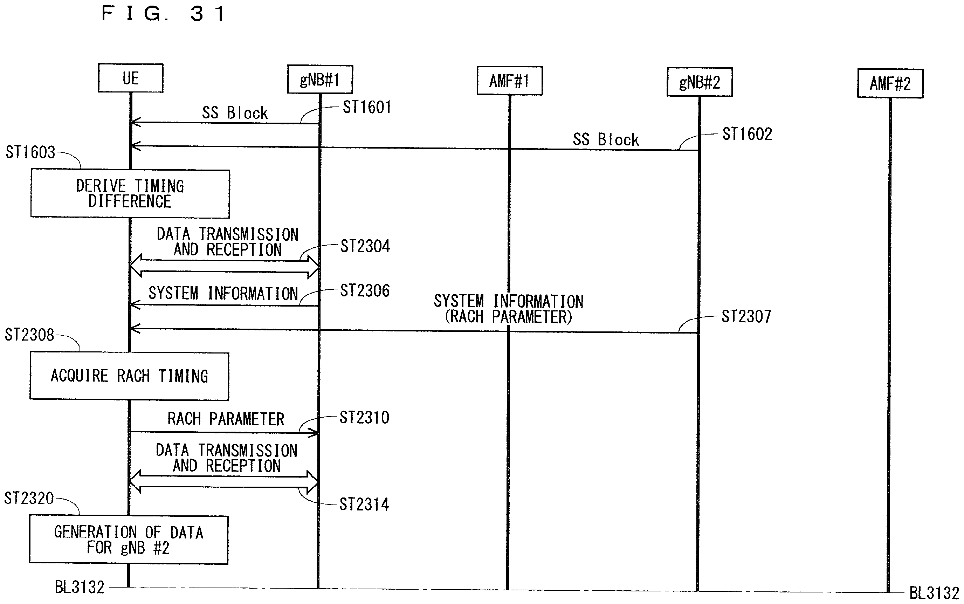

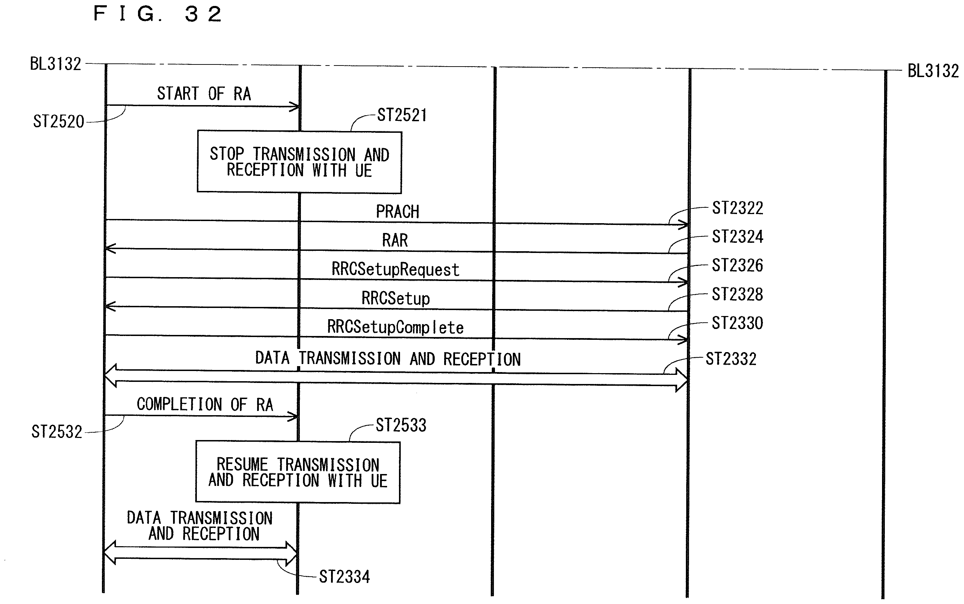

FIG. 31 and FIG. 32 are each a sequence diagram illustrating the third example of operation in which the multi-SIM UE performs random access processing with the inactive base station.FIG. 31 and FIG. 32 are connected at the position of a boundary line BL3132.In FIG. 31 and FIG. 32, the UE is connected to two NWs (NW #1 and NW #2), and are connected to gNB #1 under NW #1 and gNB #2 under NW #2.In FIG. 31 and FIG. 32, AMF #1 and AMF #2 respectively exist under NW #1 and NW #2.In the example illustrated in FIG. 31 and FIG. 32, gNB #1 is an active base station, and gNB #2 is an inactive base station.In FIG. 31 and FIG. 32, processes the same as those of FIG. 16 to FIG. 17 and FIG. 27 to FIG. 28 are denoted by the same step numbers, and common description is omitted.

Steps ST1601 to ST1603 illustrated in FIG. 31 are the same as those of FIG. 16.Steps ST2304 to ST2320 illustrated in FIG. 31 are the same as those of FIG. 27 and FIG. 28.

In Step ST2520 illustrated in FIG. 32, in response to data generation for gNB #2, the UE notifies gNB #1 that random access processing with gNB #2 is to be started.The UE may perform the notification by using L1/L2 signaling, by using MAC signaling, or by using RRC signaling.In Step ST2521, gNB #1 stops transmission and reception with the UE.

Steps ST2322 to ST2332 illustrated in FIG. 32 are the same as those of FIG. 28.

In Step ST2532 illustrated in FIG. 32, the UE notifies gNB #1 that the random access processing with gNB #2 has completed. The UE may perform the notification by using L1/L2 signaling, by using MAC signaling, or by using RRC signaling.In Step ST2533, gNB #1 resumes transmission and reception with the UE.

Step ST2334 illustrated in FIG. 32 is the same as that of FIG. 28.

As another example, the UE may request the active base station to suspend the RRC connection with the base station, or may request the active base station to release the RRC connection. The UE may perform the request by using RRC signaling. The RRC signaling may be newly provided signaling, for example, RRC suspend request (RRCSuspendRequest), or may be RRC release request (RRCReleaseRequest).The active base station may suspend or release connection between the UE and the active base station.The UE may start the random access processing with the inactive base station after connection suspension or connection release with the active base station.With this configuration, for example, complexity of the communication system can be avoided.

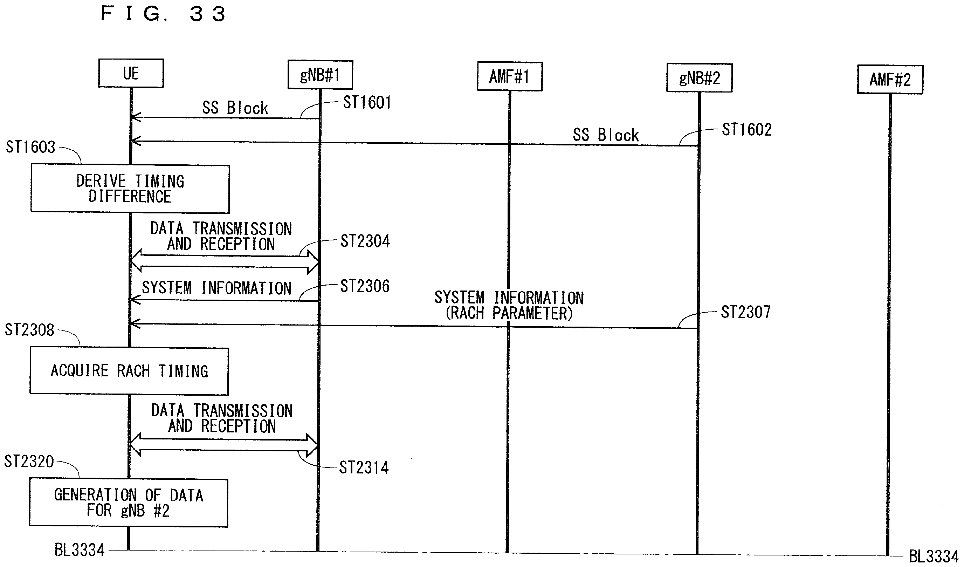

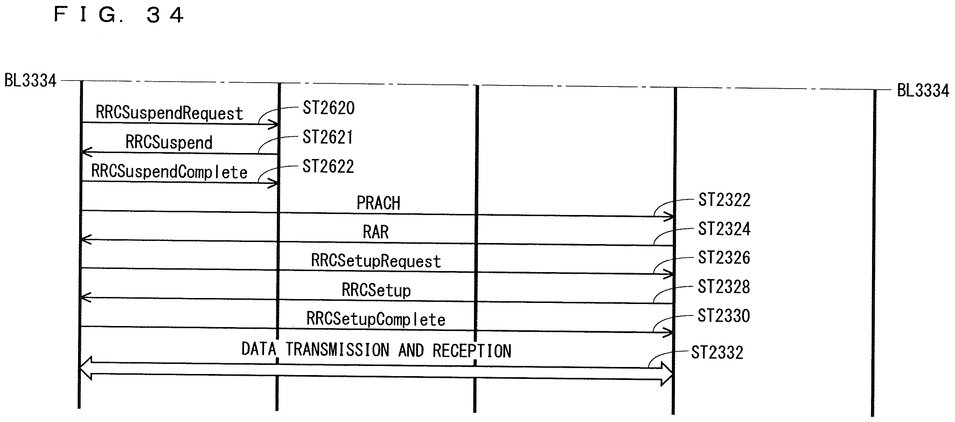

FIG. 33 and FIG. 34 are each a sequence diagram illustrating the fourth example of operation in which the multi-SIM UE performs random access processing with the inactive base station.FIG. 33 and FIG. 34 are connected at the position of a boundary line BL3334.In FIG. 33 and FIG. 34, the UE is connected to two NWs (NW #1 and NW #2), and are connected to gNB #1 under NW #1 and gNB #2 under NW #2.In FIG. 33 and FIG. 34, AMF #1 and AMF #2 respectively exist under NW #1 and NW #2.In the example illustrated in FIG. 33 and FIG. 34, gNB #1 is an active base station, and gNB #2 is an inactive base station.FIG. 33 and FIG. 34 illustrate an example in which RRC connection between the UE and gNB #1 is suspended along with uplink data generation from the UE to gNB #2.In FIG. 33 and FIG. 34, processes the same as those of FIG. 16 to FIG. 17 and FIG. 27 to FIG. 28 are denoted by the same step numbers, and common description is omitted.

Steps ST1601 to ST1603 illustrated in FIG. 33 are the same as those of FIG. 16.Steps ST2304 to ST2320 illustrated in FIG. 33 are the same as those of FIG. 27 and FIG. 28.

In Step ST2620 illustrated in FIG. 34, the UE requests gNB #1 to suspend RRC connection. The UE may perform the request by using RRC signaling.The RRC signaling may be newly provided signaling, for example, RRC suspend request (RRCSuspendRequest).

In Step ST2621 illustrated in FIG. 34, gNB #1 commands the UE to suspend RRC connection.For the command from gNB #1 to the UE, RRC signaling, for example, RRC suspend (RRCSuspend) disclosed in Non-Patent Document 24 (TS 38.331), may be used.The UE may suspend RRC connection with gNB #1, based on the suspend command of Step ST2621.In Step ST2622, the UE notifies gNB #1 of completion of RRC connection suspension.For the notification from the UE to gNB #1, RRC signaling, for example, RRC suspend complete (RRCSuspendComplete) disclosed in
Non-Patent Document 24 (TS 38.331), may be used.

The UE starts random access processing with gNB #2 after RRC connection suspend completion with gNB #1.Steps ST2322 to ST2332 illustrated in FIG. 34 are the same as those of FIG. 28.

FIG. 33 and FIG. 34 illustrate a case in which RRC connection between the UE and gNB #1 is suspended; however, the RRC connection may be released.In Step ST2620, the UE may request gNB #1 to release RRC connection. In Step ST2621, gNB #1 may command the UE to perform RRC connection release.In Step ST2622, the UE may notify gNB #1 of release of RRC connection.With this configuration, for example, memory usage in the UE can be reduced.

As another example, the UE may request the AMF connected to the active base station to release connection with the NW connected by the active base station, or may request the AMF to suspend the connection. The UE may request the AMF to release or suspend by using NAS signaling.The AMF may release or suspend connection with the UE by using the request.

For example, the AMF may command the active base station to release RRC connection with the UE, or may command the active base station to suspend the RRC connection.The active base station may command the UE to release or suspend RRC connection by using the command.The UE may start random access processing with the inactive base station after connection release with the NW.With this configuration, for example, effects similar to those of the above can be obtained.

According to the first modification, time for random access processing between the UE and the inactive base station can be secured.As a result, connection start or resumption with the inactive base station is enabled.

### Third Embodiment

The second embodiment discloses a method of avoiding collision between scheduling by the active base station and synchronization etc. timing of the inactive base station.The third embodiment discloses a method of avoiding collision of scheduling when the multi-SIM UE communicates with the active base stations of a plurality of NWs.

Timing at which communication can be performed between the UE and the base station of each NW is allocated by means of time division.

The allocation may be performed by the UE.The UE may notify the base station of each NW of information related to the allocation. The base station of each NW may perform transmission and reception with the UE by using the allocation.

The UE may perform the notification by using RRC signaling.With this configuration, for example, much information can be notified.As another example, the UE may perform the notification by using MAC signaling.With this configuration, for example, the UE can promptly execute the notification.As another example, the UE may perform the notification by using L1/L2 signaling.With this configuration, for example, the UE can further promptly execute the notification.

Another solution is disclosed.The allocation may be determined by the base station (which may be hereinafter referred to as a determination base station).For example, the primary NW disclosed in the first embodiment may determine the allocation.The base station of the primary NW may notify the UE of the allocation.

The UE may notify the determination base station of information necessary for determination of the allocation.For the notification, the UE may use RRC signaling, MAC signaling, L1/L2 signaling, or a combination of two or more of the above. The determination base station may determine the allocation by using the information.

As examples of the information necessary for determination of the allocation, the following (1) to (7) are disclosed.
(1) Information related to an identifier of the base station of another NW
(2) Information related to scheduling of the base station of another NW
(3) Information related to a numerology of the base station of another NW
(4) Information related to frame timing of the base station of each NW
(5) Information related to timing for receiving a synchronization signal, system information, and/or paging from the base station of another NW
(6) Information related to random access processing with the base station of another NW
(7) Combination of (1) to (6) above

For example, the information of (1) above may be a base station identifier of the base station of another NW, or may be a cell identifier.With this configuration, for example, the determination base station can recognize another base station.As a result, complexity related to the allocation by the determination base station can be avoided.

For example, the information of (2) above may be a control resource set (CORESET) allocated to the UE by the base station of another NW, may be information related to scheduling dynamically allocated by the base station, may be configured scheduling (for example, semi-persistent scheduling, and/or a configured grant), may be information related to allocation of the PUCCH, or may be information related to allocation of an SRS.The determination base station may determine the allocation by using the information of (2) above.With this configuration, for example, collision of scheduling between the determination base station and another base station can be prevented.

For example, the information of (3) above may be a subcarrier spacing, a slot length, or a symbol length used by the UE for transmission and reception with the base station of another NW, or may be a parameter µ disclosed in Section 4.2 of Non-Patent Document 13 (TS 38.211).With this configuration, for example, in scheduling of the active base station, reliability of operation of avoiding the synchronization signal and the like from the inactive base station can be enhanced.

The information of (4) above may be the same as the information of (4) disclosed as the information used for paging collision avoidance in the first embodiment.The information may be, for example, information related to a difference of frame timings between the determination base station and another base station.As another example, the information of (4) above may be a predetermined time point in each base station, for example, time at the boundary of a predetermined SFN.With this configuration, for example, even when there is a frame offset between the determination base station and another base station, collision of scheduling between the base stations can be avoided.

The information of (5) above may be such information that the inactive base station is interpreted as the base station of another NW in the information of (1) to (9) disclosed as the information related to the timing at which the UE receives the synchronization signal, the system information, and/or the paging from the inactive base station in the second embodiment.With this configuration, for example, both of data transmission and reception with one base station and reception of the synchronization signal, the system information, and/or the paging from another base station (for example, reception of paging along with system information update) can be implemented.

The information of (6) above may be the information of (1) to (8) disclosed as the information related to the random access processing with the base station of another NW in the second modification of the first embodiment.With this configuration, for example, both of data transmission and reception with one base station and random access processing with another base station (for example, random access processing for an on-demand system information request) can be implemented.

The determination base station may perform notification of the allocation by using RRC signaling.With this configuration, for example, the determination base station can perform notification of much information.As another example, the determination base station may perform the notification by using MAC signaling.With this configuration, for example, the determination base station can promptly execute the notification.As another example, the determination base station may perform the notification by using L1/L2 signaling.With this configuration, for example, the determination base station can further promptly execute the notification.

The UE may notify the base station of another NW of the allocation received from the determination base station. The UE may perform the notification by using RRC signaling, by using MAC signaling, or by using L1/L2 signaling.The base station of another NW may perform transmission and reception with the UE by using the allocation.With this configuration, for example, collision of scheduling for the UE can be prevented also between base stations of different NWs.

The base station of another NW may request the UE to change the allocation.The UE may notify the determination base station of the request. The determination base station may change the allocation by using the request.With this configuration, for example, efficiency in the communication system can be enhanced.

Another solution is disclosed.The determination base station may notify the base station of another NW of the allocation.An interface may be provided between the determination base station and the base station of another NW.The interface may go through the UPF of each of other NWs.The determination base station may notify the base station of another NW of the allocation by using the interface.

Another solution is disclosed.A default allocation pattern may be provided.The default pattern may be, for example, stored in the SIM included in the UE.The UE may notify the base station of each NW of the default pattern. The base station of each NW may perform transmission and reception with the UE by using the default allocation.With this configuration, for example, complexity related to collision avoidance of scheduling for the UE between the base stations can be avoided.

A plurality of default allocation patterns may be provided.For example, the plurality of allocation patterns may be provided for each SIM.Priority may be provided for the plurality of allocation patterns.For example, when the allocation patterns configured for each SIM conflict with each other, any allocation pattern may be prioritized. The UE may notify each base station of the allocation pattern having high priority.With this configuration, for example, complexity related to collision avoidance of scheduling for the UE between the base stations can be avoided.

As another example, the default allocation pattern may be provided in a standard.With this configuration, for example, collision avoidance of scheduling for the UE between the base stations can be promptly executed.

The method disclosed in the third embodiment may be used for avoidance of conflict of UE capability.For example, when there is a conflict with the UE capability that the UE has with each NW, priority may be provided for each capability.The priority may be, for example, given statically. Alternatively, the priority may dynamically change, and for example, UE capability for the primary NW may be prioritized.With this configuration, for example, malfunction of the communication system caused due to the conflict of the UE capability can be prevented.

The above-described solutions may be combined together.For example, the UE may notify the determination base station and the base station of another NW of the default allocation pattern.The determination base station may change the allocation by using the allocation pattern.The determination base station may notify the UE of information related to the changed allocation. The UE may notify the base station of another NW of information related to the changed allocation.The determination base station and the base station of another NW may perform transmission and reception with the UE by using the changed allocation.With this configuration, for example, flexibility of scheduling of the UE in each base station can be enhanced.

According to the third embodiment, collision of scheduling when the multi-SIM UE communicates with the active base stations of a plurality of NWs can be avoided.As a result, reliability of communication between the UE and the plurality of base stations can be enhanced.

### First Modification of Third Embodiment

When the multi-SIM UE communicates with the active base stations of a plurality of NWs, inter-NW preemption may be performed. The inter-NW preemption may be, for example, transmission and reception that is performed with time resources allocated for transmission and reception performed between the UE and one NW being reallocated for transmission and reception having high priority performed between the UE and another NW

Signaling for inter-NW preemption may be provided between the UE and the base station.

A signal for requesting inter-NW preemption may be provided.For example, in uplink inter-NW preemption, an SR for inter-NW preemption may be provided.The PUCCH for communicating the SR may be provided.By using different resources on the time and/or frequency-axis and/or codes between the PUCCH for the SR and the PUCCH of the conventional SR, the SR and the conventional SR can be distinguished from each other.

For notification of the signal from the UE to the base station, for example, L1/L2 signaling may be used, MAC signaling may be used, or RRC signaling may be used.In a case of L1/L2 signaling, for example, the above-described PUCCH may be provided, and notification may be performed on the PUCCH.The resources of the PUCCH may be configured by the base station in advance for the UE.By using L1/L2 signaling, the request of inter-NW preemption can be notified early.

For example, in the uplink inter-NW preemption, the UE may transmit the SR for inter-NW preemption to the base station. The base station may be a communication target related to the inter-NW preemption.The SR may include information indicating inter-NW preemption.The information may be, for example, an identifier indicating inter-NW preemption.The information may be, for example, information indicating priority in the inter-NW preemption, for example, information related to information, for example, QoS.The information may be, for example, information related to timing capable of communication for the preemption allocated by the UE.

The base station may allocate frequency and/or time resources for inter-NW preemption to the UE by using the SR.The base station may notify the UE of information related to the frequency and/or time resources allocated to the UE.For example, the notification from the base station to the UE may be performed using L1/L2 signaling, may be performed using MAC signaling, or may be performed using RRC signaling. The notification from the base station to the UE may be a dynamic grant, or may be a configured grant. The UE may perform inter-NW preemption communication for the base station by using the notification.

In allocation of transmission and reception timing between the UE and each NW disclosed in the third embodiment, an overlapping period between the NWs may exist.The UE may, for example, apply the above-described SR for inter-NW preemption in the overlapping period.For example, the UE may transmit the SR for inter-NW preemption to one NW base station.When the UE transmits the SR, the UE may not perform communication between another NW and the base station. Alternatively, when the UE transmits information related to timing capable of communication for the preemption allocated by the UE to the base station, the UE may not perform communication between another NW and the base station during the period of the timing.With this configuration, for example, the UE can promptly start NW preemption in the overlapping period.

For example, the SR for inter-NW preemption may include information indicating that communication with the base station of another NW is performed.The UE may transmit the SR to one NW base station.When the UE transmits the SR, the UE may perform communication with the base station of the another NW without performing communication with the base station of the NW that transmitted the SR.Alternatively, when the UE transmits the information related to the timing capable of communication for the preemption allocated by the UE to the base station, the UE may perform communication with the base station of the another NW without performing communication with the base station of the NW that transmitted the SR during the period of the timing.With this configuration, for example, the base station of the NW that received the SR can recognize that the UE communicates with the base station of another NW.With this configuration, reception processing from the UE in the base station of the NW that received the SR need not be performed.This can reduce power consumption of the base station.

In the above-described overlapping period, the base station may notify the UE of information related to allocation of frequency and/or time resources. The UE may perform reception operation of the information in response to the above-described SR transmission.When the UE performs reception operation of the information, the UE may not perform transmission and reception with another NW.With this configuration, for example, the base station can promptly notify the UE of the information.

In the above-described overlapping period, inter-NW preemption communication from the UE to the base station may be performed.The UE may perform inter-NW preemption communication for the base station in response to reception of the above-described information related to allocation of frequency and/or time resources.The base station may allocate inter-NW preemption communication from the UE during the overlapping period between the NWs, or may allocate inter-NW preemption communication from the UE at timing of transmission and reception allocation with its own base station.When the UE performs inter-NW preemption communication, the UE may not perform transmission and reception with another NW.With this configuration, for example, the UE can promptly execute uplink transmission having high priority to the base station.

Inter-NW preemption may be performed in downlink communication.The base station may notify the UE of occurrence of downlink inter-NW preemption.For example, the notification may be performed using L1/L2 signaling, may be performed using MAC signaling, or may be performed using RRC signaling. The UE may continue downlink reception from the base station by using the notification.For example, the UE may not switch the transceiver for the use of the base station for the use of the base station of another NW.With this configuration, for example, the UE can promptly receive downlink communication having high priority.

The UE may perform reception operation of downlink inter-NW preemption.The UE may perform the reception operation during the SS burst from the base station of another NW.For example, the UE may perform the reception operation during the SS block constituting the SS burst.With this configuration, for example, the UE can receive downlink inter-NW preemption even while the UE receives a synchronization signal from another NW.As a result, the UE can promptly receive downlink communication having high priority.

The UE may notify the base station of each NW of information necessary for determination of inter-NW preemption.The information may be, for example, the same as the information of (1) to (7) disclosed as the information necessary for determination of allocation of timing capable of communication with the base station of each NW in the third embodiment.The base station of each NW may determine whether or not communication with the UE is inter-NW preemption communication by using the information.For example, the base station of each NW may determine whether or not collision of scheduling with the base station of another NW occurs by using the information of (4) above, in other words, information related to the frame timing of the base station of each NW.When collision of scheduling with the base station of another NW occurs, the base station of each NW may determine that inter-NW preemption communication occurs.With this configuration, for example, occurrence of inter-NW preemption communication can be minimized in the communication system, and efficiency in the communication system
can be enhanced.

Communication in which the UE can perform transmission and reception with any NW may exist.The communication may be, for example, communication of emergency information, for example, communication in a public warning system (PWS).Each base station of each NW may perform the communication for the UE.With this configuration, for example, the UE can promptly receive the communication.

The UE may delete the communication received in an overlapping manner.The UE may, for example, use only the communication that is received the earliest, and delete the communication received second or later than that.The communication may include an identifier indicating the same information. The UE may detect the overlap of the communication by using the identifier.With this configuration, for example, redundant warning reception in the UE can be prevented.

Another solution is disclosed.Inter-NW preemption may be performed by using increase/decrease of transmission power.For example, inter-NW preemption may be communication in which transmission power of communication having high priority is configured to be high, and transmission power of communication having low priority is configured to be low.Inter-NW preemption performed by using increase/decrease of transmission power may be performed when the UE includes a plurality of transceivers. With this configuration, for example, reliability of communication having high priority can be enhanced.

For example, in uplink inter-NW preemption, the UE may transmit the SR for inter-NW preemption to the base station with its transmission power being increased.The UE may perform transmission to the base station of another NW with its transmission power being lowered.The base station may configure the transmission power of the UE to be high by using the SR.The base station may notify the UE of a scheduling grant for inter-NW preemption by using the SR.The grant may include information related to uplink transmission power.The UE may perform inter-NW preemption communication to the base station with its transmission power being increased by using the notification.

According to the first modification, inter-NW preemption can be performed in the multi-SIM UE. As a result, QoS in the communication system can be satisfied.

### Fourth Embodiment

A method of performing power adjustment from the UE when the multi-SIM UE performs communication with the base stations of a plurality of NWs has not yet been disclosed.As a result, power used for transmission from the UE to each base station may be excessively large or excessively small in quantity.

In the fourth embodiment, a method for solving the above-described problem is disclosed.

The UE notifies the base station of power that can be transmitted to the base station of each NW

The power may be, for example, obtained by subtracting total transmission power allocated to the base station of another NW from maximum transmittable power of the UE.

The maximum transmittable power of the UE may be different for each NW.The maximum transmittable power of the UE may be notified from the base station of each NW to the UE.In this case, the transmittable power of the UE for each NW can be, for example, determined as follows.Let Pa be transmittable maximum power for one certain NW being a determination target of transmittable power, and Pb be power obtained by subtracting total transmittable power allocated for another NW other than the above-described one NW from the largest transmittable maximum power for each NW

In this case, the smaller one of Pa and Pb may be determined as the transmittable power for the one NW.If transmittable power is not allocated for another NW, total transmittable power allocated for another NW other than the above-described one NW may be 0.With this configuration, for example, the power transmitted by the UE to the one NW can be prevented from being excessive in quantity.

The UE may perform the notification by using RRC signaling.With this configuration, for example, the UE can notify each base station of much information.

As another example, the UE may perform the notification by using MAC signaling.With this configuration, for example, the UE can promptly execute the notification. The MAC signaling may be, for example, signaling the same as the PHR disclosed in

### Non-Patent Document 17 (TS 38.321).

As another example, the UE may perform the notification by using L1/L2 signaling.With this configuration, for example, the UE can further promptly execute the notification.

The base station of each NW that has received transmittable power from the UE may perform scheduling for communication for the UE by using information of the transmittable power of the UE.For example, the scheduling may be a resource amount to be allocated on the frequency-axis, may be information related to transmission power of the UE, or may be information necessary for the UE to derive transmission power. With this configuration, such scheduling that may cause the power used for transmission from the UE to each base station to be excessively large or excessively small in quantity can be avoided.

In determination of transmittable power of the UE, priority may be provided between the NWs.For example, the transmittable power of the UE is determined from the NW having high priority.The following will disclose a specific example of a case in which transmittable power for an NW (referred to as NW1) having predetermined priority is already determined, and subsequently, transmittable power for communication with a new NW (referred to as NW2) is determined.The UE compares priority of NW1 and priority of NW2, and when priority of NW2 is high, the UE discards transmittable power already determined for NW1, and determines transmittable power for NW2. Subsequently, transmittable power for NW1 is determined again.When priority of NW2 is low, transmittable power for NW2 is determined with the above-described method using the transmittable power already determined for NW1.With this configuration, transmission power can be preferentially allocated for communication with the NW having high priority.

As another method, priority may be provided for each service.Priority may be provided for each service whose communication is performed in each NW.Priority for each service may be, for example, included in QoS of the service. Alternatively, when there is already information related to priority in QoS, the information related to the priority may be used.The UE may determine transmittable power for each NW by using priority for each service whose communication is performed in each NW.As a determination method of the transmittable power, the above-described transmittable power determination method may be applied.Transmission power can be preferentially allocated for the NW that performs communication for service having high priority.

When the UE re-determines power that can be transmitted to the NW, the UE may notify the base station of the NW of the re-determined transmittable power.The base station may perform scheduling by using the notified transmittable power of the UE.With this configuration, the base station of each NW can perform more optimal scheduling for the UE.This can enhance use efficiency of resources used in each NW

A configuration method of priority is disclosed.For example, priority may be provided among the NWs.As another method, priority may be provided for each service.The priority may be the same value among the NWs in advance, or may be the same value among the services.The priority may be given to the NWs in advance, or may be given to the services in advance.Priority of service may be given as QoS of the service.The priority may be notified from each NW to the UE.For example, the priority may be notified at the time of registration processing performed by the UE with each NW.For example, the priority may be notified at the time of service request processing or PDU session establishment processing performed by the UE with each NW.For example, the UE may configure priority.For example, a person may configure priority.As a method in which the UE and a person configure priority, for example, the configuration method of the primary NW/secondary NW disclosed in the first embodiment may be applied as appropriate.With this configuration, the UE can recognize priority.Further, the configuration method of the priority disclosed herein may be applied to the above-described embodiments and modifications as appropriate.

A plurality of powers that can be transmitted to the base station of each NW may be provided.For example, transmittable power may be provided when the UE performs inter-NW preemption communication for the NW.Power that can be transmitted to the NW may be provided when the UE performs inter-NW preemption communication for another NW different from the NW.With this configuration, for example, reliability of inter-NW preemption can be enhanced.

The UE may notify the base station of each NW of information related to the plurality of powers.The UE may perform the notification by using RRC signaling, by using MAC signaling, or by using L1/L2 signaling.

The base station of each NW may notify the UE of information as to which transmittable power among the plurality of powers is to be used.The UE may derive power that can be transmitted to the base station by using the information.The base station may notify the information by using RRC signaling.With this configuration, for example, the base station can notify the UE of much information.

As another example, the base station may perform notification of the information by using MAC signaling.With this configuration, for example, the base station can promptly perform notification of the information.As another example, the base station may perform notification of the information by using L1/L2 signaling.With this configuration, for example, the base station can further promptly perform notification of the information.

As another example, the base station of each NW may not notify the UE of information as to which transmittable power among the plurality of powers is to be used.For example, when the plurality of powers are (a) transmittable power when the UE performs inter-NW preemption communication for the NW, (b) transmittable power when NW preemption is not performed, and (c) power that can be transmitted to the NW when the UE performs inter-NW preemption communication for another NW different from the NW, the information may not be notified from the base station to the UE.The UE may determine power that can be transmitted to the base station by using information related to NW preemption, for example, information related to a scheduling grant for NW preemption communication, which is acquired from the base station.As another example, the UE may autonomously determine transmittable power.For example, when the UE transmits the SR for NW preemption communication to the base station of one NW, the UE may determine power that can be transmitted to the base station of each NW.With this configuration, for example, the signaling amount between the base station and the UE can be reduced.

As another example in which a plurality of powers that can be transmitted to the base station of each NW are provided, transmittable power can be provided for each uplink channel.For example, for each of the PUSCH, the PUCCH, the uplink RS, and the RACH, power that can be transmitted to the base station of each NW may be provided.Power that can be transmitted to the base station of each NW may be provided for each UCI included in the PUCCH.Power that can be transmitted to the base station of each NW may be provided for each uplink RS, for example, for each of the SRS, the DMRS, and the PRS.The UE may perform uplink transmission by using information of the transmittable power for each channel.With this configuration, for example, flexibility in the communication system can be enhanced.

When a plurality of powers that can be transmitted to the base station of each NW are provided, the above-described examples may be combined together. For example, transmittable power for uplink channel may be different depending on whether there is NW preemption communication.With this configuration, for example, reliability of NW preemption communication can be enhanced, and flexibility in the communication system can be enhanced.

According to the fourth embodiment, power used for transmission from the UE to each base station can be appropriately adjusted.

Each embodiment and its modifications described above are merely examples, and each embodiment and its modifications can be freely combined together.Further, any constituent element in each embodiment and its modifications can be changed or omitted as appropriate.

For example, in each embodiment and its modifications described above, the subframe is an example of a unit of time of communication in a fifth generation base station communication system.It may be a unit of scheduling. In each embodiment and its modifications described above, processing described as a unit of a subframe may be performed as a unit of a TTI, a unit of a slot, a unit of a sub-slot, or a unit of a mini-slot.

While the present invention has been shown and described in detail, the foregoing description is in all aspects illustrative and not restrictive. It is understood that numerous unillustrated modifications can be devised.

### Explanation of Reference Signs

- 200: communication system
- 202: communication terminal apparatus
- 203: base station apparatus
- 210: communication system

## Claims

1. A communication system comprising:
- a communication terminal; and
- a plurality of networks configured to perform radio communication with the communication terminal,
wherein the communication terminal determines whether or not there is paging causing collision among a plurality of pagings respectively transmitted to the communication terminal from the plurality of networks, and when the communication terminal detects the collision of the paging, the communication terminal notifies at least one of the plurality of networks that transmits the paging causing the collision of the paging about the collision of the paging.

2. The communication system according to claim 1,
wherein the at least one of the plurality of networks notified of the collision of the paging from the communication terminal changes timing of transmitting the paging to the communication terminal.

3. The communication system according to claim 1 or 2,
wherein the communication terminal determines whether or not the collision of the paging occurs by using frame timing of each of the plurality of networks and timing related to the paging.

4. A communication terminal configured to perform radio communication with a plurality of networks,
wherein the communication terminal determines whether or not there is paging causing collision among a plurality of pagings respectively transmitted to the communication terminal from the plurality of networks, and when the communication terminal detects the collision of the paging, the communication terminal notifies at least one of the plurality of networks that transmits the paging causing the collision of the paging about the collision of the paging.

5. A network configured to perform radio communication with a communication terminal,
wherein the communication terminal determines that paging transmitted from the network to the communication terminal collides with paging transmitted from another network to the communication terminal, and when the communication terminal notifies the network of collision of the paging, the network changes timing of transmitting the paging to the communication terminal.
